(19) Europäisches Patentamt

European Patent Office

Office européen des brevets

(11) **EP 4 495 841 A1**

(12) **EUROPEAN PATENT APPLICATION**

(43) Date of publication:
**22.01.2025 Bulletin 2025/04**

(21) Application number: **23186558.5**

(22) Date of filing: **19.07.2023**

(51) International Patent Classification (IPC):
**G06N 10/20** $^{(2022.01)}$      **G06N 10/60** $^{(2022.01)}$

(52) Cooperative Patent Classification (CPC):
**G06N 10/60; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal Netherlands B.V.
1076 ED Amsterdam (NL)**

(72) Inventors:
• **JADERBERG, Ben
  1076 ED Amsterdam (NL)**
• **ELFVING, Vincent
  1076 ED Amsterdam (NL)**
• **GHOSH, Atiyo
  1076 ED Amsterdam (NL)**
• **GENTILE, Antonio Andrea
  1076 ED Amsterdam (NL)**

(74) Representative: **De Vries & Metman
  Overschiestraat 180
  1062 XK Amsterdam (NL)**

(54) **SOLVING COMPUTATIONAL PROBLEMS USING TRAINABLE QUANTUM FEATURE MAPS**

(57)     A method and system for solving a computational problem using a hybrid data processor comprising a classical computer and quantum computer the method comprising receiving or determining information on one or more quantum circuits defining operations of a parameterized quantum model of a target function, the target function representing an approximate solution to the computational problem, preferably one or more differential equations and one or more associated boundary conditions, the one or more quantum circuits comprising one or more quantum feature maps for encoding one or more classical input features associated with the target function into the Hilbert space of the quantum register, wherein the one or more feature maps include one or more unitary operators defining a time evolution over a Hamiltonian, preferably a generator Hamiltonian, applied to quantum elements of the quantum register, the Hamiltonian evolution being parameterized by a first set of variational parameters and the one or more classical input features; and, determining the target function based on the parameterized quantum model and a loss function associated with the computational problem, the determining including varying the first set of variational parameters to determine a set of eigenfrequencies of the Hamiltonian which is optimized for the computational problem, the set of eigenfrequencies defining quantum modes, which the parameterized quantum.

Fig. 3A

**Description**

<u>Technical field</u>

The disclosure relates to trainable quantum feature maps, and in particular, though not exclusively, to methods and systems solving computational problems using trainable quantum feature maps, and a computer program product for executing such methods.

<u>Background</u>

The use of parameterised quantum circuits as quantum machine learning (QML) models is a promising approach to solving relevant problems in machine learning with today's quantum computers.

For example, Kyriienko et al describe in their article Solving nonlinear differential equations with differentiable quantum circuits, Phys. Rev. A 103, 052416 (2021), QML models which can be trained to model functions that are solutions to sets of (non)linear differential equations wherein quantum feature maps are used to encode function variables into the Hilbert space associated with a quantum register. Similarly, Paine et al, describe in their article Quantum Quantile Mechanics: Solving Stochastic Differential Equations for Generating Time-Series QML models which can be trained to solve stochastic differential equations, which play an important role in a broad range of applications including molecular dynamics, fluid dynamic and biology.

These trainable quantum models use quantum circuits that include a data encoding block, also referred to as a quantum feature map, which encodes input features into the Hilbert space of the quantum register, and a trainable block , e.g. a variational ansatz, containing trainable parameters. Based on a variational optimization scheme a quantum model may be trained to approximate a target function. An important application of such trainable quantum models is solving complex computational problems such as differential equations or graph problems.

In conventional QML models, the architecture and configuration of the feature encoding is set beforehand and fixed for the course of training. Importantly, the specific form of the feature encoding determines the space of possible solutions the model can represent. Hence, the choice of feature encoding is very influential for the practical performance of quantum models in terms of accuracy and trainability. Despite this, in many cases it is hard or not possible to a priori determine what the best feature encoding would be for a particular problem, which may require knowing the solution to begin with. In these cases a generic configuration is used, limiting what solution functions can be approximated efficiently. Techniques such as non-linear encoding functions, data re-uploading and serial quantum feature maps are used to improve the practical performance of quantum models so solve a computational problem. For example, Manuel, et al. "Optimizing Quantum Classification Algorithms on Classical Benchmark Datasets." Entropy 25.6 (2023): 860 and Gentinetta, Gian, et al. "Quantum Kernel Alignment with Stochastic Gradient Descent." arXiv:2304.09899 (2023) describe the application of gates with trainable parameters on data already encoded into the Hilbert space. Simiarly, Perez-Salinas et al described in their article "Data re-uploading for a universal quantum classifier", Quantum 4, 226 (2020) a scheme for encoding data in the Hilbert space using data re-uploading. In practice however these approaches only provide limited improvement, while the depth of the quantum circuits increase considerably.

Hence, there is a need in the art for improved quantum models that provides accurate estimates of solutions to complex computation problems without substantially increasing of the depth of the quantum circuits defining a quantum model.

<u>Summary</u>

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by processors of a hybrid computer comprising a classical computer and a quantum computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments may relate of a method for for solving a computational problem using a hybrid data processor comprising a classical computer and quantum computer.

In an embodiment, the method may include receiving or determining information on one or more quantum circuits defining operations of a parameterized quantum model of a target function, the target function representing an approximate solution to the computational problem, the one or more quantum circuits comprising one or more quantum feature maps for encoding one or more classical input features associated with the target function into the Hilbert space of the quantum register, wherein the one or more feature maps include one or more unitary operators defining a time evolution over a Hamiltonian applied to quantum elements of the quantum register, the Hamiltonian evolution being parameterized by a first set of variational parameters and at least part of the one or more classical input features.

In an embodiment, the method may include determining the target function based on the parameterized quantum model and a loss function associated with the computational problem, the determining including varying the first set of variational parameters to determine a set of eigenfrequencies of the Hamiltonian which is optimized for the computational problem, the set of eigenfrequencies defining quantum modes, which the parameterized quantum model can use to determine the target function.

In an embodiment, the computational problem may include one or more differential equations and one or more associated boundary conditions.

In an embodiment, the Hamiltonin may be generator Hamiltonian.

In an embodiment, the first set of variational parameters my directly act on the Hamiltonian of the one or more unitary operations.

In an embodiment, the first set of variational parameters may directly act on terms of the Hamiltonian, such as the Pauli operators, of the one or more unitary operators.

In an embodiment, the varying of the first set of variational parameters may include: translating the operations of the one or more quantum circuits into control signals for controlling and reading out of the quantum elements; applying the operations to the quantum elements based on the control signals; determining classical measurement data by measuring the state of the quantum elements of the quantum register; determining a target function based on the classical measurement data; using the loss function to compute a loss value based on the target function and adjusting the first set of variational parameters based on the loss value.

In an embodiment, the method may further comprise repeating the varying of the first set of variational parameters and the determining of a target function based on the classical measurement data until the computed loss value indicates that the target function matches or approximates a solution to the computational problem or until one or more other exit conditions are met.

The output of variational quantum models can be represented as a Fourier series in the input features of the quantum model. For example if the model has an input feature $x$, the Fourier series is in terms of frequencies of $x$. In quantum models based on a quantum feature map and a variational ansatz, frequencies of the Fourier series are uniquely determined by the eigenvalues of the so-called generator Hamiltonian of the feature map, while the Fourier coefficients are tuned based on the variational parameters of the ansatz. The inventors realized that for conventional quantum models these frequencies are fixed throughout training. In theory this is not a problem, since the spectrum of an infinitely large quantum model forms a universal orthogonal basis set which can accurately approximating any intricate function. Yet in reality, practically sized quantum computers will only permit quantum models with a finite number of frequencies. Thus, it is in this real-life regime that great importance should be given to the choice of basis functions, which may not be the orthogonal convention.

To address this problem, the embodiments in this disclosure, define quantum models which comprise a set of trainable parameters $\vec{\theta}_{FM}$ into the generator Hamiltonian of the feature map thereby defining a trainable feature map (TFM). Importantly, it can be shown that the addition of these trainable parameters lead to a quantum model with eigenfrequencies that are not fixed, but are themselves also trainable. This circumvents the issue of knowing the optimal basis functions a priori, without relying on the orthogonal convention. The use of trainable feature maps as described with reference to the embodiments has a significant impact on the effectiveness of quantum models, allowing the learning of generator Hamiltonians with desirable spectral properties for the task at hand. Quantum neural networks (QNNs) comprising TFMs can learn basis functions that are inaccessible to efficient fixed feature maps (FFM) QNN architectures. Furthermore, even when the optimal choice of basis functions are in fact orthogonal as convention, TFMs have a practical advantage in choosing the correct number of frequencies. The practical effectiveness of TFMs is illustrated by solving the Navier-Stokes equations to higher accuracy with a simple linear parameterisation of each FM qubit.

In an embodiment, the one or more quantum circuit further comprises one or more variational quantum circuits, for example one or more ansatze, wherein the one or more variational quantum circuits are parameterized by a second set of variational parameters but not parameteterized with the one or more classical input features and wherein determining the target function further includes varying the the second variational parameters to determine the contribution of each of the quantum modes to the target solution.

In an embodiment, at least part of the first and second variational parameters may be adjusted using the same classical optimizer, preferably using a gradient-based optimizer.

In another embodiment, at least part of the first and second variational parameters are adjusted using different classical optimizers

In an embodiment, determining the target function may further include: initializing the first set of variational parameters based on the index of the quantum elements the feature map applies to create an initial set of eigenvalues of the Hamiltonian.

In an embodiment, the loss function may include a distance metric for evaluating the estimated target function.

In an embodiment, the computational problem includes one or more differential equations. In that case, one or more derivatives of the target function may be determined based on automatic differentiation of the quantum model, preferably using quantum circuit differentiation.

In an embodiment, the quantm circuit differentiation may be based on the generalized parameter shift rules.

In an embodment, the parameterized quantum model may comprise one or more differentiable quantum circuits (DQCs), the one or more differentiable quantum circuits including one or more derivative features maps for encoding the one or more derivatives of the target function.

In an emboimdent, the one or more derivative feature maps may include one or more unitary operations defining a time evolution over a Hamiltonian applied to quantum elements of the quantum register, the Hamiltonian being parameterized by at least part of the variational parameters of the first set of variational parameters or one or more further variational parameters.

In an embodiment, the one or more quantum circuits may futher comprise one or more further quantum circuits configured to evaluate one or more quantum kernels and one or more derivatives of the one or more quantum kernels.

In an embodiment the one or more further quantum circuits may be configured to determine an overlap between a first quantum state associated with a one of the one or more classical input features and the first set of variational parameters and a second reference quantum state.

In an embodiment, the overlap may be determined based on a Hadamard test or a SWAP test.

In an embodiment, the one or more classical input features may be encoded based on rotation operations.

In an embodiment, Hamiltonian evolution may be parameterized using a function of the one or more classical input features, preferably a non-linear encoding function, such as one or more Chebyshev polynomials.

In an embodiment, the one or more quantum circuits may further include one or more further quantum circuits configured to evaluate one or more quantum kernels and one or more derivatives of the one or more quantum kernels.

In an embodiment, the one or more furhter quantum circuits may be configured to determine an overlap between a first quantum state associated with a first input variable and a second static reference quantum state.

In an alternative embodiment, the one or more further quantum circuits may be configured to determine an overlap between a first quantum state associated with a first input variable and a second quantum state associated with a second input variable.

In an embodiment the overlap between the first and second quantum state can be determined via a Hadamard test or a SWAP test.

In an embodiment, the one or more quantum feature maps may be configured as analog-digital quantum circuits.

In an embodiment, the quantum model may be implemented based on gate-based quantum devices, digital-l/analog quantum devices, neutral-atom-based quantum devices, ion-based quantum devices, optical quantum devices, superconducting quantum devices, silicon based quantum devise and/or gaussian boson sampling devices.

In a further aspect, the embodiments may relate to a system for solving a computational problem, the system comprising a hybrid data processor comprising a classical computer and quantum register, the system being configured to: receiving or determining information on one or more quantum circuits defining operations of a parameterized quantum model of a target function, the target function representing an approximate solution to the computational problem, preferably one or more differential equations and one or more associated boundary conditions, the one or more quantum circuits comprising one or more quantum feature maps for encoding one or more classical input features associated with the target function into the Hilbert space of the quantum register, wherein the one or more feature maps include one or more unitary operators defining a time evolution over a Hamiltonian, preferably a generator Hamiltonian, applied to quantum elements of the quantum register, the Hamiltonian evolution being parameterized by a first set of variational parameters and the one or more classical input features; and, determining the target function based on the parameterized quantum model and a loss function associated with the computational problem, the determining including varying the first set of variational parameters to determine a set of eigenfrequencies of the Hamiltonian which is optimized for the computational problem, the set of eigenfrequencies defining quantum modes, which the parameterized quantum model can use to determine the target function.

In an embodiment, the varying of the first set of variational parameters may include: translating the operations of the quantum circuit into control signals for controlling and readout of the quantum elements; applying the operations to the quantum elements based on the control signals; determining classical measurement data by measuring the state of the quantum register; determining an target function based on the classical measurement data; using the loss function to compute a loss value based on the target function and adjusting the first set of variational parameters based on the loss value.

In further embodiment, the system for solving a computational problem, comprising a hybrid data processor comprising a classical computer and quantum computr, may be configured to perform any of the steps described with reference to the embodiments described above.

The embodiments may also relate to a computer program or suite of computer programs comprising at least one software code portion or a computer program product storing at least one software code portion, the software code portion, when run on a hybrid data processing system comprising a classical computer and a quantum computer comprising a hardware quantum register, being configured for executing the method steps according any of the above-described embodiments.

Brief description of the drawings

**Fig. 1** depicts a hybrid computer processor comprising a classical computer and a quantum computer;
**Fig. 2A** and **2B** illustrate a scheme of training a quantum model for approximating a certain target function, and a generic fixed feature map composed solely by a single layer of rotations;
**Fig. 3A** and **3B** illustrate a scheme of training a quantum model comprising a trainable feature map according to an embodiment;
**Fig. 4A-4B** depict an example of a trainable feature map and the loss for training a QNN using trainable feature maps and fixed non-trainable feature maps;
**Fig. 5A-5C** depict solutions to Laplace equations computed on the basis of different schemes;
**Fig. 6A** and **6B** depict a method for solving computation problems using a quantum model with trainable feature map according to an embodiment;
**Fig. 7A-7C** depict experimental results of training a QNN using a conventional feature map and a trainable feature map
**Fig. 8A-8D** depict a quantum model comprising trainable quantum feature maps and solutions of a Navier-Stokes computational problem determined by the quantum model;
**Fig. 9A-9C** depict examples of trainable quantum feature maps;
**Fig. 10** depict a hardware-level schematic illustrating the application of logical operations to qubits using a quantum circuit;
**Fig. 11A-11C** schematically depict hardware-level schematics illustrating the application of logical operations to qubits using a quantum circuit;
Fig. 12A-12C schematically depicts a quantum circuit based on a digital-analog implementation;
**Fig. 13A-13C** schematically depicts a quantum circuit based on a further digital-analog implementation;
**Fig. 14A-14B** schematically depicts a quantum circuit based on another digital-analog implementation;
**Fig. 15A-15B** schematically depicts a quantum circuit based on yet another digital-analog implementation;
**Fig. 16** schematically depicts a quantum circuit based on a further digital-analog implementation.

Description of the embodiments

The embodiments in this disclosure generally relate to improved schemes for solving computational problems using a quantum model, in particular a quantum machine learning model, that comprises one or more trainable quantum feature maps for encoding classical features, e.g. classical variables, associated with the computational problem into the Hilbert space of the quantum register.

In conventional quantum models, the architecture and configuration of the feature encoding is set and fixed beforehand based on a quantum feature map. The form of the encoding determines the representation space of possible approximations to solutions of the computational problem. Hence, the specific choice is very influential for the practical performance of the quantum model, in terms of accuracy and trainability. However, in many cases it is hard or not possible to determine a good or best representation space and hence configuration. In the prior art, techniques such as data re-uploading and serial quantum feature maps were proposed to address this problem but in practice these approache only provided limited improvements.

The embodiments in this application addres this problem by using quantum models using trainable feature maps, wherein a trainable feature map comprises one or more unitary operations $\hat{U}_F(\vec{x}, \vec{\gamma}, \vec{\theta}_F)$ comprising a set of trainable parameters $\vec{\theta}_F$ that directly act on the generator Hamiltonian of the unitary operation. As will be described hereunder in more detail, trainable feature maps enable automatic tuning or modification of the feature map encoding for a specific computational problem that needs to be solved. The quantum model can be efficiently trained for producing an accurate approximation of the solution to different computational problems, without any prior knowledge of the representation space for these solutions. This way, quantum models with trainable feature maps provide a very versatile tool for many applications in which complex computational problems need to be addressed including for example solutions for complex equations such as (nonlinear) differential equation or stochastic differential equations (SDEs) which are used for simulating complex physics processes such as plasmas and other diffusive processes, scrambling data using a quantum embedding for anonymization, generating solutions to graph-based problems like maximum independent set or maximum clique, etc.

The quantum models described with reference to the embodiments in this application may be executed by a hybrid computer system including a quantum register.

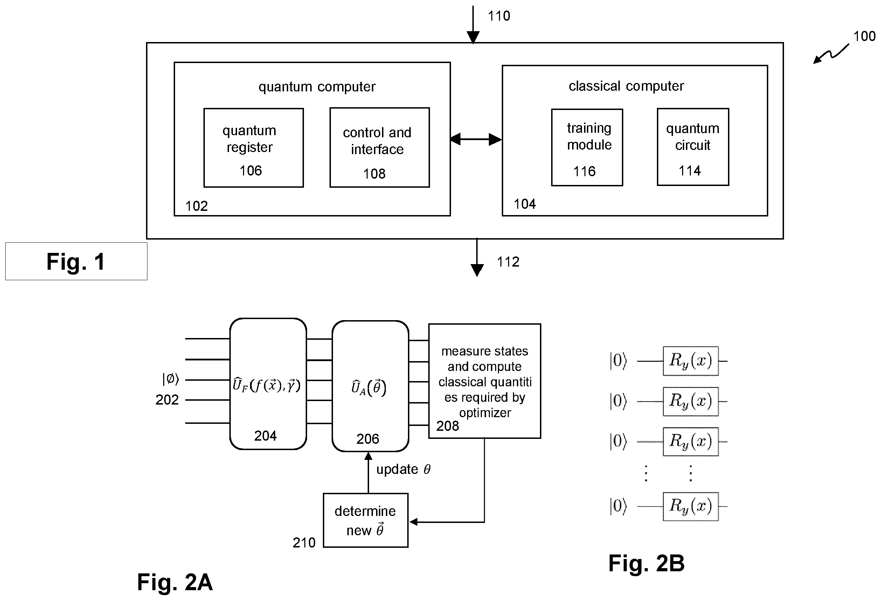

**Fig. 1** depicts an example of a hybrid computer system comprising a classical computer **102** comprising one or more classical processor and a quantum computer system **104**, which may be used to implement the embodiments described in this application. The hybrid computer system may be used to train a quantum model to provide an accurate approximation of solution to a computational problem. As shown in the figure, the quantum computer system may comprise one or more quantum registers **106**, wherein each quantum register may comprise a plurality of quantum elements, e.g. qubits or qudits. Such quantum register may also be referred to as a quantum processor or a quantum processing unit (QPU). The quantum register may be implemented based on one of the well known quantum hardware platforms including but not limited to superconducting circuits, quantum dots, neutral atoms, ions, optical qubits or NV centers.

The system may further include a memory storage for storing a representation of a quantum circuit **114**. A quantum circuit defines a sequence of operations which can be executed on a quantum computer. In practice, the execution of quantum circuits involves applying a sequence of signals to the quantum elements of the quantum registers. A controller system **108** comprising input output (I/O) devices may form an interface between the quantum register and the classical computer. For example, the controller system may include an optical and/or electromagnetic pulse generating system for generating pulses, e.g. optical, voltage and/or microwave pulses, for applying operations to the qudits of the quantum register in accordance with the quantum circuit.

Further, the controller may include readout circuitry for readout of the qudits. At least a part of such readout circuitry may be located or integrated with the chip that includes the qudits. The system may further comprise a (purely classical information) input **110** an (purely classical information) output **112**. The input and output may be part of an interface, e.g. an interface such as a user interface or an interface to another system. Input data may include training data and/or information about one or more differential equation(s) which may be used as constraints in the generative modelling or for which a solution needs to be determined. This information may include the dimensionality, order, degree, coefficients, boundary conditions, initial values, regularization values, etc. The input data may be used by the system to classically calculate values, e.g. parameter settings, which may be used to initialize a quantum circuit that is implemented on the quantum processor. Similarly, output data may include loss function values, sampling results, correlator operator expectation values, optimization convergence results, optimized quantum circuit parameters and hyperparameters, measurements of quantum state overlaps, and other classical data. The system may include a training module **116** that is configured to train a quantum model based on operations of a parameterized quantum circuit **114** which may be stored in a memory of the system. Information about the quantum circuit and training data may be provided via input **110** to the classical computer.

**Fig. 2A** and **2B** illustrate a known scheme of training a quantum model for approximating a certain target function, e.g. a solution to differential equation. As shown in the figure the quantum model may be represented by a quantum circuit including a feature map **204** for encoding one or more classical input features $x$ into the Hilbert space of quantum register **202** and a variational ansatz **206**. These input features could be for example classical data, for example pixels in a classification problem, or the variables of differential equation. The feature map may comprise one or more unitaries $\hat{U}_F(f(\vec{x}), \vec{\gamma})$ associated with a Hamiltonian $\hat{G}_F(f(\vec{x}))$, wherein $f(\vec{x})$ is an encoding function and wherein the variational ansatz may comprise one or more unitaries $\hat{U}_A(\vec{\theta})$ parameterized by parameters $\vec{\theta}$, which may be variationally optimized. It is noted that in this disclosure different notations $f(\vec{x})$, $\phi(\vec{x})$ or $\varphi(\vec{x})$ for the encoding function may be used.

The quantum circuits may include sequences (layers) of quantum operations which may be executed by the quantum register. The training of the quantum model may be based on an optimization scheme, wherein after initialisation of the variational parameters, the operations of the quantum circuit may be executed by the quantum register, and the state of the quantum register may be measured. For example, a cost operation $\hat{C}$ may be applied to the final quantum state of the quantum register producing a set of classical outputs representing the prediction of the quantum model. In an alternative embodiment, computation of the overlap between the final quantum state and a cost quantum state, which may be either a reference state, or one parameterised by other inputs and operations, produces a set of classical outputs representing the prediction of the quantum model.

Based on the measured state, quantities such as a loss value may be computed using a loss function and if the quantities do not meet one or more optimization conditions, the variational parameters may be updated by an optimizer. Typically, the loss function may depent on the computational problem to be solved. For example, in case of solving a differential equation, the loss function may include the primitive elements f(x), df(x)/dfx, ect. of the differential equation. Thereafter, the quantum circuit may be executed using the updated variational parameters and the state of the quantum register may be measured and a new loss value may be computed based on the measured state. These steps may be repeated until the one or more conditions are met. The state of the optimized quantum circuit may represent an optimized approximation of a desired target function.

The scheme depicted in **Fig. 2** may be used as quantum machine learning model which has applications including but not limited to applications of classical machine learning, and specific applications such as generating unknown distribution from a set of input features or solving differential equations. The embodiments apply to such quantum models in general, including but not limited to specific architecture implementations such as quantum neural networks and quantum kernels as illustrated in more detail with reference to the embodiments in this application.

**Fig. 2B** depicts an example of a simple quantum feature map wherein input features $f(\vec{x}) = x$ are encoded based on a single rotation gate operation $R_y$. This quantum feature map may be defined by a unitary defined as tensor product of $R_y$ rotations: $\widehat{U}_F(\vec{x}) = e^{\sum_{j=1}^{n} -i\hat{Y}^j x/2}$, where $\hat{Y}$ is the Pauli matrix and *the j* superscript refers to the tensor product space the operator is applied to and is not an exponent. Here, the input *x* is rescaled by a factor of 1/2 for simplicity, such that the feature map can be implemented in a quantum circuit by a set of parallel gates $R_y(x)$ acting across each qubit as shown in the figure.

More generally, quantum feature maps may be described as the tensor product of an arbitrary number of sub-feature-maps, wherein each sub-feature map may be represented by the time evolution of a Hamiltonian, referred to as a generator

Hamiltonian, applied on an arbitrary sub-dimension of the qubits according to the following expression:

$$\hat{U}_F(\vec{x}, \vec{\gamma}) = \bigotimes_m e^{-i\hat{G}_m(\vec{\gamma})\phi_m(\vec{x})}, \qquad (1)$$

where for the sub-feature-map m, $\hat{G}_m(\vec{\gamma})$ is the generator Hamiltonian which depends on non-trainable parameters $\vec{\gamma}$ and

$$\hat{U}_F(\vec{x}) = e^{-i\hat{G}x}. \qquad (2)$$

As described by Schuld et al in their article, "The effect of data encoding on the expressive power of variational quantum machine learning models", Phys. Rev. A 103, 032430 (2021), it is well understood that the output of the quantum model may be expressed as a partial Fourier series in the features. For example, a quantum model may be based on a quantum kernel, which is a quantum model wherein an output is obtained by measuring the so-called kernel distance from one static reference state, e.g. ground state $\psi$ to the parameterised quantum state (the overlap of two different states), such that $f(x, \vec{\theta}) = \langle \psi | \hat{U}_A(\vec{\theta}) \hat{U}_F(\vec{x}) | 0 \rangle$ (or its real part, or absolute value). Here $|0\rangle$ is the standard notation for a fiducial quantum state that quantum registers are initialised with. Its physical interpretation depends upon the hardware architecture of choice. In this kernel case, an output *f* may be described by the following expression:

$$f(x, \vec{\theta}) = \sum_{j=1}^{d} c_j(\vec{\theta}) e^{-ix\lambda_j}, \qquad (3)$$

where *j* spans the Hilbert space of the generator up to d = $2^n$ for *n* qubits. Here, the eigenvalues $\{\lambda_j\}$ of the generator $\hat{G}$ sets the frequencies of the Fourier modes, whilst the action of the quantum variational ansatz $\hat{U}_A(\vec{\theta})$ with variational parameters $\vec{\theta}$ can only change the coefficients $c_j$. This implies that the Fourier modes accessible to the quantum models are fixed once the generator has been chosen.

As described in Paine et al "Quantum Kernel Methods for Solving Differential Equations", arXiv:2203.08884 (2022), alternatively a quantum kernel may involve computing the overlap of two states may involve a second state parameterised against a second classical input value *y*, such that the output of the quantum model can be described by the expression $f(x, y, \vec{\theta}) = \langle 0 | \hat{U}_F^\dagger(\vec{y}) \hat{U}_A^\dagger(\vec{\theta}_y) \hat{U}_A(\vec{\theta}_x) \hat{U}_F(\vec{x}) | 0 \rangle$ (or its real part, or absolute value). Note that for some applications like those invoked in the the article one can replace $\hat{U}_A(\vec{\theta}_y) = \mathbb{I} = \hat{U}_A(\vec{\theta}_x)$, hence removing the variational ansatz blocks. The frequencies involved will in this alternative case depend on the eigenvalues $\{\lambda_j^x\}$ and $\{\lambda_j^y\}$ (see also below), nevertheless they remain fixed.

Any training procedure can therefore only change $c_j(\vec{\theta})$ how much each mode contributes to the output of the quantum model. This same logic applies for the general feature map described in Eq. (1), whereby the contribution of the eigenvalues of each sub-feature-map leads to a fixed macro-eigen-spectrum of the entire quantum model. This fixes the degree of spectral modes of the quantum model for any encoding function $\phi(\vec{x})$, for example one that encodes the input features in as a Chebyshev series rather than Fourier series.

Other quantum models also have a similar expression as a Fourier series. For example, a quantum neural network (QNN) may be defined as a quantum model in which a classical output is obtained through measuring the expectation value of a cost operator $\hat{C}$ applied to the output of the quantum circuit $f(x,\vec{\theta})$ = $\langle 0|\hat{U}_F^\dagger(x)\hat{U}_A^\dagger(\vec{\theta})|\hat{C}|\hat{U}_A(\vec{\theta})\hat{U}_F(\vec{x})|0\rangle$ . In this case the output can be written as:

$$f(\vec{x},\vec{\theta}) = \sum_{j=1}^{d}\sum_{j'=1}^{d} c_{j,j'}(\vec{\theta},\hat{C})e^{ix(\lambda_{j'}-\lambda_j)}, \qquad (4)$$

Compared to the model in wich a quantum kernel approach is used (eq. (3)), in this case the frequencies of the Fourier series are determined by the difference $\lambda_{j'} - \lambda_j$ in the eigenvalues of $\hat{G}$ (also known as the spectral gaps). The important similarity between the two is that - also in this case - the variational parameters can only change the coefficients $c_j$, whilst it is the generator eigenvalues that uniquely determine the frequencies.

Based on this insight, it is observed that current QML models use a static feature map, which fixes the distribution of generator eigenvalues and thus the spacing of modes accessible to the quantum model over the course of training. The consequence of a fixed eigen-spectrum during training is apparent when considering that the ideal distribution of eigenvalues, that produces a quantum model whose output exactly solves the computational problem, e.g. a differential equation, is not known beforehand. Thus, the feature map chosen in advance may produce an eigenvalue distribution that does not have the optimal number of unique modes or optimal spectral spacing, thus limiting access to the optimal frequencies for a specific problem. As a consequence, a quantum model may be unable to learn the correct solution of a computational problem up to a desired accuracy.

To address this problem the embodiments in this application use a feature map comprising a unitary associated with a Hamiltonian that is parameterized by a trainable parameters $\vec{\theta}_F$. Such feature map may be referred to as a trainable feature map. Hence, the trainable feature map may comprise a unitary operation $\hat{U}_F(\vec{x},\vec{\gamma},\vec{\theta}_F)$ wherein the trainable parameters $\vec{\theta}_F$ of the feature map directly act on the Hamiltonian of the unitary operation, in particular the generator Hamiltonian. In this context, to "directly act on" means that on or more terms of the generator Hamiltonian $\hat{G}_F(f(\vec{x}),\vec{\gamma},\vec{\theta}_F)$ are multiplied by at least one or more of the trainable parameters $\vec{\theta}_F$ or some function of the the trainable parameters $\vec{\theta}_F$.

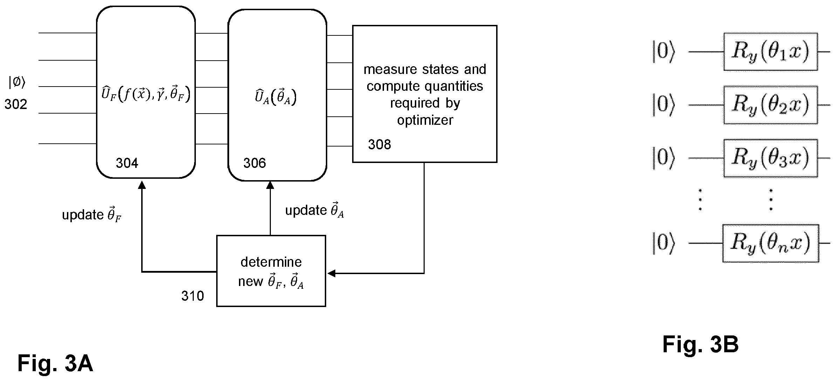

**Fig. 3A** and **3B** illustrate illustrate a scheme of training a quantum model comprising a trainable feature map according to an embodiment. The quantum model may be represented by a quantum circuit including a trainable quantum feature map **304** comprising one or more unitaries $\hat{U}_F(\vec{x},\vec{\gamma},\vec{\theta}_F)$ associated with a generator Hamiltonian $\hat{G}_F(f(\vec{x}),\vec{\gamma},\vec{\theta}_F)$ which is parameterized by first parameters $\vec{\theta}_F$. The trainable quantum feature may is configured to encode one or more classical input features $x$ into the Hilbert space of a quantum register **302** using encoding function $f(\vec{x})$. The parameters may be used to variationally optimize the quantum model using a certain loss function which may be associated with a certain computational problem. In some embodients, the quantum circuit may also include a variational ansatz $\hat{U}_A(\vec{\theta}_A)$ **306** which is parameterized by second parameters $\vec{\theta}_A$.

An optimization scheme may be used to train the quantum model in which a loss value is determined based on the measured state of the quantum register in a similar way as explained in **Fig. 2.** In this case however, at least one optimizer **310** may be used to update the variational parameters $\vec{\theta}_F$ for the feature map and the variational parameters $\vec{\theta}_A$ for the ansatz. The variational parameters may be optimised by a single optimiser or by two different optimisers.

**Fig. 3B** depicts an example of a parameterized feature map according to an embodiment. The quantum circuit illustrates the parameterized version of the feature map as depicted in **Fig. 2B**. The parameterized feature map may be defined by tensor product of parameterized $R_y$ rotations $\hat{U}_F(\vec{x},\vec{\theta}_F) = e^{\sum_{j=1}^{n} -i\vec{\theta}_{Fj}\,\hat{Y}^j x/2}$ . Hence, the embodiments require a parameterized version of the generator Hamiltonian, in this particular example $\hat{G} = \sum_{j=1}^{n}\vec{\theta}_{Fj}\,\hat{Y}^j$ , whereby the generator acting on qubit $j$ is multiplied by a trainable parameter $\vec{\theta}_{Fj}$ from the overall set of newly introduced parameters $\vec{\theta}_F$. The included parameterization allows varying the parameters $\vec{\theta}_F$ during training to learn a generator eigen-spectrum of the generator Hamiltonian with eigenvalues which are optimized for the computational problem to be solved. The eigen-frequencies forming the quantum modes of the quantum model may be optimized by minimizing a loss value that is computed on the basis of a loss function, which is associated with the problem to be solved.

More generally, from the above it follows that the trainable feature map used in the embodiments in this application may be defined as a tensor product of a set of m sub-feature maps according to the following expression:

$$\hat{U}_F(\vec{x},\vec{\gamma},\vec{\theta}_F) = \bigotimes_m e^{-i\hat{G}_m(\vec{\gamma},\vec{\theta}_F)\phi_m(\vec{x})}. \qquad (5)$$

wherein $\phi(\vec{x})$ is an encoding function and wherein a parameterization $\vec{\theta}_F$ is introduced that acts directly on the one or more generator Hamiltonians $\hat{G}_m(\vec{\gamma}, \vec{\theta}_F)$. It is noted that this trainable feature map is fundamentally different from combining a feature map and variational ansatz into a higher-level abstraction containing one unitary that describes the total quantum circuit $\hat{U}_{QC}(\vec{x}, \vec{\theta}) = \hat{U}_F(\vec{x})\hat{U}_A(\vec{\theta})$, since in such cases the parameterisation does not act directly on the generator Hamiltonian in the exponent of Eq. (5). The trainable parameters that directly act on the generator Hamiltonian will provide a trainable eigenvalue distribution, which can be optimized for a certain computational problem thus providing a quantum model with capabilities beyond what was possible with just a fixed feature map and a parameterised variational ansatz as known from the prior art.

It is noted that the general form of Eq. (5) may also include one or more feature maps in which the choice of the decomposition of the Hermitian generator matrix $G_m(\vec{\gamma}, \vec{\theta}_F)$ into Pauli matrices (which is always possible, but not univocous) as well as the tensor product space it acts on, are parameterised by an optimiser or learning routine. Here, one relies on the fact that a generator Hamiltonian can always be written as a sum of unitary operators, which - in case of qubits can be written in terms of pauli terms. For example, a feature map in which an external trainable process (e.g., a reinforcement learning agent) chooses a generator from the Pauli matrices $\{\hat{X}, \hat{Y}, \hat{Z}\}$ and a qubit to apply to, would also be a trainable feature map according to an embodiment, when considering that $\vec{\theta}_F$ could contain an arbitrary number of binary parameters $\theta^{bin}$ that add or remove the m-th operation. As an explicit example, a sub-feature-map acting on a single qubit could apply the parameterized generator $\hat{G}_m(\vec{\gamma}, \vec{\theta}_F) = \left(\theta_{F_1}^{bin}\hat{X} + \theta_{F_2}^{bin}\hat{Y} + \theta_{F_3}^{bin}\hat{Z}\right)$. In this case, the optimiser is choosing the generator matrix from a possible 27 different compositions of Pauli operators.

Further, it is observed that the number of parameters in $\vec{\theta}_F$ of equation (5) can be arbitrarily large. Applying this to the simple example of the 1-D Fourier feature map of Eq. (2) in which the encoding function $\phi(\vec{x}) = x$, the trainable feature map is defined by the following expression:

$$\hat{U}_F(\vec{x}, \vec{\theta}_F) = e^{-i\hat{G}(\vec{\theta}_F)x}. \qquad (6)$$

Following the same reasoning of eq. (3) above, the output of the quantum model may be a Fourier series where the frequencies of each mode depend explicitly on the parameterisation of the feature map:

$$f(\vec{x}, \vec{\theta}_F, \vec{\theta}_A) = \sum_{j=1}^{d} c_j(\vec{\theta}_A)e^{-ix\lambda_j(\vec{\theta}_F)}. \qquad (7)$$

Thus, the embodiments allow for the changing of the eigenvalue distribution of the feature map over the course of training, which - in turn - allows the choice of spectral modes (i.e. the frequencies of the Fourier series) that may minimise the loss function faster or further when compared to an optimization scheme for a quantum model comprising non-trainable feature maps.

Implementing a trainable quantum feature map at a quantum circuit level for a 1-D Fourier feature map as defined by equation (2) may start with an unparameterized version of the feature map. A generator Hamiltoninan $\hat{G} = \sum_{j=1}^{n} \hat{Y}^j$ may be selected, which includes Pauli matrix $\hat{Y}$ applied to each of the $n$ qubits of the feature map. Here, superscript $j$ refers to the tensor product space the operator is applied to (and is not an exponent). This generator may be referred to as a product feature map. Starting with the known unparameterized case, the feature map may then be expressed as follows:

$$\hat{U}_F(\vec{x}) = e^{\sum_{j=1}^{n} -i\hat{Y}^j x/2} \qquad (8)$$

$$= \prod_{j=1}^{n} e^{-i\hat{Y}^j x/2} \qquad (9)$$

$$= e^{-i\hat{Y}^1 x/2} \cdot e^{-i\hat{Y}^2 x/2} \cdot \ldots \cdot e^{-i\hat{Y}^n x/2}. \qquad (10)$$

Note that the input $x$ may be multiplied by a factor of 1/2 for simplicity, such that the feature map can be implemented in a quantum circuit by a set of parallel gates $R_y(x)$ acting across each qubit as explained with reference to **Fig. 2B.** Parameterization of the feature map requies a parameterized version of the generator. An example whould be $\hat{G} = \sum_{j=1}^{n} \theta_j \hat{Y}^j$, whereby the generator acting on qubit $j$ is multiplied by a trainable parameter $\theta_j$ from the overall

set of newly introduced parameters $\vec{\theta}_F$ as explained with reference to **Fig. 3B**.

Although the parameterization of the feature map illustrated in **Fig. 3B** is very simple, it still allows quantum models to represent functions that are otherwise inaccessible to those with non-trainable feature maps. This is true independently from the number of qubits, ansatz layers or training resources. This is due to the unique correspondence between the feature map eigenvalues and the frequencies of the quantum model's Fourier decomposition as described above with reference to equation 3.

The use of trainable feature maps as disclosed in this application has particular advantages in quantum models for solving complex complex computational problems such as (non)linear differential equations using differentiable quantum circuits (DQC) as described in WO2022/101483, which is hereby incorporated by reference, or using differential quantum kernels which as described in PCT application PCT/EP2023/055620 with title *"Quantum kernel based regression",* which is hereby incorporated by reference into this application.

Here, the output of a quantum model may be treated as a surrogate solution to a differential equation (DE) and the parameters are optimized with respect to minimizing the residual of the DE. The core of the DQC algorithm lies in how the DE residual is obtained, which requires computing derivatives of the quantum model's output with respect to its input features. This is achieved through differentiating the quantum feature map directly, obtaining gradients through quantum sub-routines such as the parameter shift rule. An overview of the DQC workflow in which trainable feature maps are used is given by the algorithm in table 1 below:

---

**Algorithm 1** DQC with trainable feature maps

---

**Require:** Nonlinear differential equation system $\mathcal{S}$ with dependent variables $\vec{X} = X_1, X_2, \ldots, X_n$, their respective boundary conditions $\mathcal{S}_B$, and optional regularization points $\vec{x}_{\mathrm{reg}}$.

**Require:** Training architecture: Specify a quantum model including choice of trainable quantum feature map $\hat{U}_F(\vec{x}, \vec{\gamma}, \vec{\theta}_F)$ and variational ansatz $\hat{U}_A(\vec{\theta}_A)$, the cost function type $\hat{C}$ and the loss function $\mathcal{L}$.

**Require:** Classical optimizer: Specify the classical optimizer that will update the trainable parameters $\vec{\theta} = \{\vec{\theta}_F, \vec{\theta}_A\}$, including the associated hyperparameters, such as gradient order $k$, learning rate, momentum, and others. Specify the number of iterations $m$ and the exit conditions.

1: Initialize trainable parameters $\vec{\theta} \to \vec{\theta}_{\mathrm{init}}$

2: **for** $i = 1$ to $m$ **do**

3:　　Choose a batch of points $\vec{x}$ within the problem space $\vec{X}$.

4:　　Evaluate the quantum model to obtain a trial solution $\vec{y}$ at these points $f(\vec{x}) = \vec{y}$

5:　　Evaluate the derivatives $\frac{\partial f}{\partial X_n}(\vec{x})$ required to obtain the differential equation residual for each point in the batch.

6:　　Add terms to the loss function $\mathcal{L}$ based on the differential equation and boundary conditions.

7:　　Add regularization terms to $\mathcal{L}$ based on the desired value and or derivatives of f$(\vec{x})$ at $f(\vec{x}_{\mathrm{reg}})$.

8:　　Run the optimizer's routine which calculates the updated values of the variational parameters $\vec{\theta}_{i+1}$ to be used in the next iteration. If using a gradient-based optimizer, calculation of $k^{th}$ order derivatives $\frac{\partial^k \mathcal{L}}{\partial \vec{\theta}^k}$ are required by the optimizer.

9: Obtain DQC solution $y(\vec{X})$ by evaluating the quantum model at points $\vec{X}$

10: **return** $y(\vec{x})$.

---

One key point to note in algorithm 1 is the calculation of partial derivatives with respect to the input features and trainable parameters in steps 5 and 8 respectively. This is in contrast to known DQC algorithms, in which the complete derivative (e.g., $\frac{df}{dX_n}(\vec{x})$) is computed since no single quantum circuit operation contains both trainable parameters $\vec{\theta}$ and

non-trainable feature parameters $\vec{x}$.

Based on the algorithmic workflow, it is evident that assessing the quality of the DQC solution can only occur after the training procedure has been completed. As such, it is not known whether the chosen feature map will have a set of eigen frequencies to represent the true solution to the differential equation. Hence, a quantum engineer may need to run a conventional DQC algorithm repeatedly, trying different types of feature maps. By contrast, when executing the DQC scheme based on trainable feature maps as described with reference to the embodiments in this application, the quantum model may be capable of computing a solution to the differential equation to a much higher accuracy, with only one run of DQC. In contrast, when using a conventional non-trainable feature map, different DQC runs may be executed with different feature maps, and possibly none of them could be optimal. Below numerical evidence of this provided in the solving of real-world differential equations.

Laplace's equation is a partial differential equation that appears in many areas of physics and engineering including electrostatics, fluid mechanics, heat transfer. It describes the behavior of a scalar field in free space and has the form:

$$\frac{\partial^2 u}{\partial x^2} + \frac{\partial^2 u}{\partial y^2} = 0 \qquad (11)$$

where $u(x,y)$ is the scalar field. In this problem we will be solving this equation for a field in a rectangular box of length and height 1, with boundary conditions defined as

$$u(x, y = 1) = 0$$

top boundary

$$u(x, y = 0) = 0$$

bottom boundary

$$u(x = 1, y) = 0$$

right boundary

$$u(x = 0, y) - \sin(\pi y) = 0$$

left boundary.

In this experiment the DQC algorithm may be used to solve Laplace's equation using a trainable feature map and and using a non-trainable (fixed) feature map so that both approaches can be compared. For the trainable feature map, a simple parameterization as shown in **Fig. 3B** was selected. Specifically, the quantum model was based on a quantum neural network comprising four qubits ($N = 4$), four ansatz layers ($L = 4$) of the hardware-efficient ansatz and a cost function, for example, a total magnetization cost function. Since the problem is a two-dimensional problem, both input featues $x$ and $y$ may be encoded in parallel across the feature map. This is different to the 1-D Fourier encoding function $\phi(\vec{x}) = x$ described above, and instead would be defined as $\phi(\vec{x}) = x_{i(m)}$ for

$$i(m) = \begin{cases} 1, & \text{if } m = 1 \text{ or } m = 2, \\ 2, & \text{if } m = 3 \text{ or } m = 4, \end{cases} \qquad (12)$$

where here the sub-feature-map index m corresponds to the qubit index of the circuit.

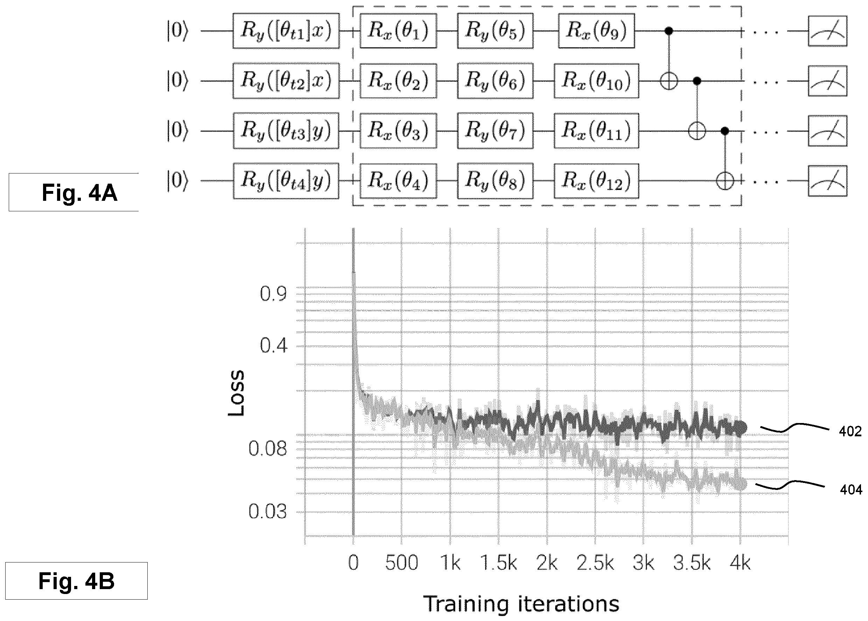

**Fig. 4A** shows the structure of the quantum circuit used in this experiment. In particular, this figure depicts a quantum circuit of a fourth qubit ($N = 4$) quantum neural network trained on the basis of the DQC scheme to solve Laplace's equation. The qubits are initialized in the $|0\rangle$ state, after which they are acted upon by the feature map, which encodes both $x$ and $y$ dimensions in parallel and comprises optional trainable parameters $\theta_t$. The feature map may be followed by one or more layers of a hardware-efficient variational ansatz as shown by the operations in contained in the dashed box. This layer is subsequently repeated (in this particular example three times) to give a QNN with a total of four ansatz layers ($L =$

4). The total magnetization cost operator $\hat{C}$ may be used to repeatedly measure the qubits of the quantum register in the $\hat{Z}$ basis to obtain an expectation value and summing the outcome.

For the DQC algorithm itself, the loss may be defined as an equally weighted sum of the individual loss terms, namely Eq. (11) and each of the boundary conditions.

$$\mathcal{L} = \mathcal{L}_{\mathrm{PDE}} + \mathcal{L}_{\mathrm{BC_{top}}} + \mathcal{L}_{\mathrm{BC_{bottom}}} + \mathcal{L}_{\mathrm{BC_{right}}} + \mathcal{L}_{\mathrm{BC_{left}}} \qquad (13)$$

For optimization, an Adam optimizer with learning rate 0.01 trained for 4000 iterations was selected, each of which evaluates a batch size of 200 randomly sampled points for the PDE term and 10 points for each of the boundary terms.

**Fig. 4B** shows a graph of the loss as a function of training iterations for the QNN with a fixed non-trainable featuremap (data trace **402**) or a QNN with a trainable feature map (data trace **404**). The loss defined in Eq. (13) may be defined as a sum of the interior and boundary losses. Both models start at the same loss at training iteration zero. This is indicative of the fact that the trainable FM parameters $\vec{\theta}_F$ are all initialised as "1", at which point the models are equivalent. After the start of the training, the loss of both models decreases at the same rate, moving along a common path away from the randomly initialised poor solution. After 1000 training iterations however a separation starts to show, in which the utility of the TFM allows convergence to lower losses as training continues. By contrast, the QNN with a non-trainable FM appears to have already reached convergence, unable to improve upon the solution reached in the first 1000 iterations. After 4000 training iterations, the TFM QNN achieves a loss that is 61.5% lower than the FFM QNN, a significant improvement.

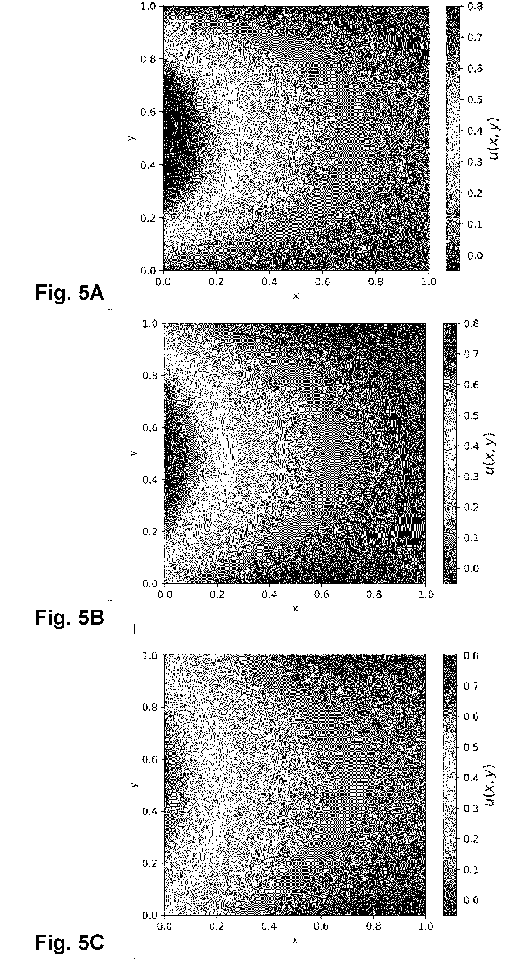

**Fig. 5A-5C** depict solutions to Laplace equations computed on the basis of different computation schemes. Specifically, the figures depict a solution to Laplace's equation which is analytically computed (**Fig. 5A**), computed based on a DQC trained quantum model comprising trainable feature maps (TFM) (**Fig. 5B**) and computed based on a DQC trained quantum model compirsing non-trainable feature maps (**Fig. 5C**). The first graph plots the analytic solution, which for this system is given as

$$u(x,y) = e^{-\pi x}\sin(\pi y). \qquad (14)$$

Comparison between the computed solutions of **Fig. 5A**, **5B** and **5C** shows that the inclusion of the trainable feature map significantly improves the accuracy of the DQC solution. Qualitatively, the solution of **Fig. 5B** correctly identifies the magnitude of the scalar field at the source on the left boundary, which is not present in **Fig. 5C**. Furthermore, when using trainable feature maps, the solution clearly shows that the positive field emanating from the left does not reach all the way to the top and bottom boundaries. This is in contrast to the solution with regular DQC of **Fig. 5C**, in which there is no clear zero field boundary at the top left and bottom left corners.

The improvement provided by the use of a trainable feature map as shown in **Fig. 5** can also be quantified. Firstly, the value of the loss function at the final training batch, as given by Eq. (13), is 0.11 for regular DQC compared to 0.048 for DQC in which a TFM is used, thus providing a reduction of the loss value of over double. Secondly, the improvement carries over when comparing the actual predictions seen in **Fig. 5**). In the region of interest $x \leq 0.5$, the mean absolute error between the predicted and true solutions is 0.083 for regular DQC and 0.048 for DQC with TFM thus providing a reduction in the error of over 40%.

Training a variational quantum circuit typically involves performing gradient-based optimization against the trainable parameters defined in step 8 of the algorithm as described above in table 1. Such gradient-based optimization may also used for optimizing the trainable feature map. If such an optimization is adopted, one thus needs to compute $\frac{\partial \mathcal{L}}{\partial \theta}$, for a suitably defined loss function $\mathcal{L}$ which captures the adherence of the (tentative) solution $f(x)$ to the conditions set by the known equation(s), and eventually the related boundary conditions, or where available, a set of data $\{y_i\}$. This is explained hereunder in more detail.

The quantum state produced by the quantum model comprising a trainable feature map may be defined as:

$$|f_{\vec{\theta}_F,\vec{\theta}_A}(x)\rangle = \hat{U}_A(\vec{\theta}_A)\hat{U}_F(x,\vec{\theta}_F)|0\rangle. \qquad (15)$$

where the parameters in the TFM have been relabeld as $\theta_F$ and the parameters in the ansatz as $\theta_A$ for clarity. The measured output of the quantum model implementing the quantum circuit may be defined as the expectation value of a cost operator $\hat{C}$:

$$f(x, \vec{\theta}_F, \vec{\theta}_A) = \langle f_{\vec{\theta}_F, \vec{\theta}_A}(x) | \hat{C} | f_{\vec{\theta}_F, \vec{\theta}_A}(x) \rangle, \qquad (16)$$

can then act as a surrogate quantum model for the target function *f*. A supervised learning (SVL) loss contribution (i.e. known a dataset) may be defined as:

$$\mathcal{L}_{SVL} = \frac{1}{M} \sum_i^M L(f(x_i, \vec{\theta}_F, \vec{\theta}_A), y_i) \qquad (17)$$

with *L* a suitable distance function. Otherwise, in a DQC setting, embedded each (partial, differential) equation in a functional $F[\partial_X f(x), f(x), x]$ to be estimated on a set of *M* collocation points $\{x_i\}$, one can define a physics-informed loss function in terms of the elements $\partial_X f(x), f(x), x$ of the differential equation:

$$\mathcal{L}_{DQC} = \frac{1}{M} \sum_i^M L(F[\partial_X f(x_i), f(x_i), x_i], 0) \qquad (18)$$

When optimizing the loss against a certain variational parameter $\theta$, one needs to compute *x*, which can be done following Kyriienko et al describe in *Solving nonlinear differential equations with differentiable quantum circuits,* if $\theta \in \vec{\theta}_A$, as the feature *x* is not in the differentiation. If instead $\theta \in \vec{\theta}_F$, then using the linearity of differentiation the following expression can be obtained:

$$\frac{\partial \mathcal{L}_{SVL}}{\partial \theta} = \frac{1}{M} \sum_i^M \frac{dL}{df} \frac{\partial f(x_i)}{\partial \theta}, \qquad (19)$$

$$\frac{\partial \mathcal{L}_{DQC}}{\partial \theta} = \frac{1}{M} \sum_i^M \frac{\partial L}{\partial \theta} (F[\partial_X f(x_i), f(x_i), x_i], 0). \qquad (20)$$

Note that in Eq. 20 the RHS is left implicit, as its exact form depends not only upon the actual choice of the L distance as in Eq. 19, but also upon the terms involved in the functional F. In order to give further guidance on the explicit treatment of this latter case, the discussion can be split according to the various terms involved in the functional *F*, under the fairly general assumption that the problem variable(s) *X* are independent from the variational parameter $\theta$:

- terms that depend solely on $x_i$ so hat the derivative $\frac{\partial \cdot}{\partial \theta}$ is null and can be neglected;
- terms containing the function *f* itself can be addressed via the chain rule already discussed with reference to Eq. 19; and,
- terms depending on $\partial_X f(x_i)$ can be similarly decomposed as

$$\frac{d^2 L}{df dX} \frac{\partial^2 f(x_i)}{\partial \theta \partial X} = \frac{dL}{d(\partial_X f)} \frac{\partial}{\partial X} \frac{\partial f(x_i)}{\partial \theta} \qquad (21)$$

wherein the latter descends from the independence highlighted above, and the first term on the RHS can be simply attained from the (known) analytical form of the loss function *L* and the functional *F*.

Hence, following the chain rule, a dependency upon $\partial f(x_i)/\partial \theta$ may be obtained. This highlights how in many algorithms using quantum models, including DQC, it is important to be able to compute the gradient of the quantum model with respect to the trainable parameter $\theta_A$ associated with the ansatz or, in this case, $\theta_F$ associated with the trainable feature map so that it can be trained by a gradient-based optimizer. For the specific case of $\theta \in \vec{\theta}_F$ instead, after combining the unitary ansatz and the cost operator as $\hat{U}_A^\dagger(\vec{\theta}_A)\hat{C}\hat{U}_A(\vec{\theta}_A) \equiv \hat{C}_A(\vec{\theta}_A)$ for brevity, Eq. (16) may be rewritten using the generic TFM form provided in Eq. 5, and isolate the only term dependent on the $\theta_{\tilde{m}}$ of interest:

$$\hat{U}_F(\vec{x}, \vec{\gamma}, \vec{\theta}_1) =$$
$$e^{-i\hat{G}_1(\vec{\gamma},\theta_1)\phi_1(\vec{x})} \otimes \ldots \otimes e^{-i\hat{G}_{\tilde{m}}(\vec{\gamma},\theta_{\tilde{m}})\phi_{\tilde{m}}(\vec{x})} \otimes \ldots \otimes e^{-i\hat{G}_M(\vec{\gamma},\theta_M)\phi_M(\vec{x})} \equiv$$
$$\hat{U}_{FL} \otimes e^{-i\hat{G}_{\tilde{m}}(\vec{\gamma},\theta_{\tilde{m}})\phi_{\tilde{m}}(\vec{x})} \otimes \hat{U}_{FR} \qquad (22)$$

and further simplify the formalism using $\hat{U}_{FR}|0\rangle \equiv |f_{FR}\rangle$ and $\hat{U}_{FL}^\dagger \hat{C}_A \hat{U}_{FL} \equiv \hat{C}_{AF}$ such that:

$$f(x, \theta_F, \theta_A) = \langle f_{FR}| e^{i\hat{G}_{\tilde{m}}(\vec{\gamma},\theta_{\tilde{m}})\phi_{\tilde{m}}(\vec{x})} \hat{C}_{AF} e^{-i\hat{G}_{\tilde{m}}(\vec{\gamma},\theta_{\tilde{m}})\phi_{\tilde{m}}(\vec{x})} |f_{FR}\rangle. \qquad (23)$$

Elicited the dependency on the single FM parameter, now the computing $\partial f/\partial\theta_{\tilde{m}}$ based on the product rule be addressed in the following way:

$$\frac{\partial f}{\partial\theta_{\tilde{m}}} = \langle f_{FR}| e^{i\hat{G}_{\tilde{m}}\phi_{\tilde{m}}(\vec{x})} \left[ \phi_{\tilde{m}}(\vec{x})\frac{\partial\hat{G}_{\tilde{m}}}{\partial\theta_{\tilde{m}}}, \hat{C}_{AF} \right] e^{-i\hat{G}_{\tilde{m}}\phi_{\tilde{m}}} |f_{FR}\rangle, \qquad (24)$$

For simplicity, the parameter dependencies of the $\hat{G}_{\tilde{m}}(\vec{\gamma},\theta_{\tilde{m}})$ generator have been omitted, and the commutator notation $[\cdot, \cdot]$ has been introduced. In order to adopt the standard parameter shift rule (PSR) for Pauli operators, Eq. (24) can be further processed by decomposing the generator $\hat{G}_{\tilde{m}}(\vec{\gamma},\theta_{\tilde{m}}) = \prod_i \hat{\sigma}_{i,\gamma}^\alpha(\theta_{\tilde{m}})$ into commuting Pauli operators $\hat{\sigma}^\alpha$, and then adopting recursively the product rule to split Eq. (24) into the estimation of the various components $\partial\hat{\sigma}_{i,\gamma}^\alpha/\partial\theta_{\tilde{m}}$.

As described above, computing gradients with respect to the trainable parameters of the quantum model can be achieved using the PSR. At a high level, this routine allows calculation of the derivative of a specific parameter $\partial f/\partial\theta_i$ by evaluating the difference between sets of quantum circuits where that parameter is shifted by excess or defect. In the case where the parameterized operations are all single qubit Pauli Hamiltonians, as is true for the examples shown in this document, then two circuit evaluations are required to obtain the first order derivative $\partial f/\partial\theta_i$. For the experiments conducted, in which an Adam optimizer is used, only first order derivatives are required.

For each input point $x_i$, training both models requires computing $\partial f/\partial\theta_i$ for all trainable parameters. Thus, the additional number of quantum circuits for each input is simply two times the number of FM parameters $|\vec{\theta}_F|$, since both contain the same ansatz parameters $\vec{\theta}_A$. Hence, an additional factor of $C_f = \frac{|\vec{\theta}_F|+|\vec{\theta}_A|}{|\vec{\theta}_A|}$ more circuit evaluations are required to train the trainable feature map model versus the non-trainable model. For the models used in the examples, $|\vec{\theta}_F|$ = 4 and $|\vec{\theta}_A|$ = 48, such that $C_f$ = 1.08. In terms of the total number of circuits required to train the models over the entire training routine, for the non-trainable FM model this can be calculated as $N_c = 2|\vec{\theta}_A|n_{bs}n_{iter}$ where $n_{bs}$ is the batch size and $n_{iter}$ is the total number of training iterations. For the experiments, this leads to a total of $2 \times 48 \times 240 \times 4{,}000 = 92{,}160{,}000$ circuit evaluations. The TFM model then requires $C_f N_c$ = 99,840,000 circuit evaluations, i.e. an additional 7,680,000 compared to the non trainable feature map.

Overall, the additional number of circuits required to train TFM models scales only linearly with the number of additional trainable parameters introduced into the FM. Furthermore, for TFMs as shown in **Fig. 3B**, where $|\vec{\theta}_F|$ scales linearly with the number of qubits and constant with the ansatz depth, the cost factor $C_f$ of large quantum models is modest. For example, the models used to solve the Navier-Stokes equations referenced elsewhere in the patent document, $C_f$ = (24+804)/804 = 1.03, corresponding to only a 3% increase in the number of quantum circuits evaluated.

When using DQC, one needs to compute the derivative with respect to an input feature x, as explained in step 5 of the DQC workflow of table 1. This differentiation is subtly different to computing the derivative with respect to a certain $\partial\theta_{\tilde{m}}$, since $x$ appears in more than one unitary operation in the feature map. To resolve this, the derivative with respect to the whole feature map can be constructed as $\frac{\partial U_F}{\partial c} = \sum_j U_{\partial F,j}$, which allows the differential to be represented as a sum of

modified circuits $U_{\partial F,j}$. This way, function derivatives may be represented using a product derivative rule. Thus, this can be combined with the parameter shift rule such that the function derivative is

$$\frac{\partial f}{\partial x} = c \sum_j \langle f^+_{\partial F,j,\vec{\theta}_F,\vec{\theta}_A}(x) | \hat{C} | f^+_{\partial F,j,\vec{\theta}_F,\vec{\theta}_A}(x) \rangle - \sum_j \langle f^-_{\partial F,j,\vec{\theta}_F,\vec{\theta}_A}(x) | \hat{C} | f^-_{\partial F,j,\vec{\theta}_F,\vec{\theta}_A}(x) \rangle,$$

$$(25)$$

wherein $U^{\pm}_{\partial F,j}$ is defined through the parameter shifting, and the index $j$ runs through individual quantum operations used in the feature map encoding. Applying the parameter shift rule once again, a second-order derivative $\frac{\partial^2 U_F}{\partial x^2}$ may be obtained with four shifted terms for each generator.

It is noted that when operating on mixed terms as the ones analysed in Eq. (21), the same PSR construct of Eq. (25) can be invoked, but replacing the expectation value for $f$, Eq. (23), with the expectation value for $\partial f/\partial\theta$, Eq. (24). The above expressions show that differentiation against any feature $x$ is not directly affected by the introduction of the additional trainable parameters $\vec{\theta}_F$ as described with reference to the embodiments in this applicaiton. If due to the latter, the corresponding $\hat{G}(\vec{\gamma},\vec{\theta})$ is not anymore involutory and idempotent, it is still possible to resort to a generalised parameter shift rule, as explained e.g. in Kyriienko et al, Generalized quantum circuit differentiation rules, Physical Review A 104.5 (2021), p. 052417, which is hereby incorporated by reference into this application.

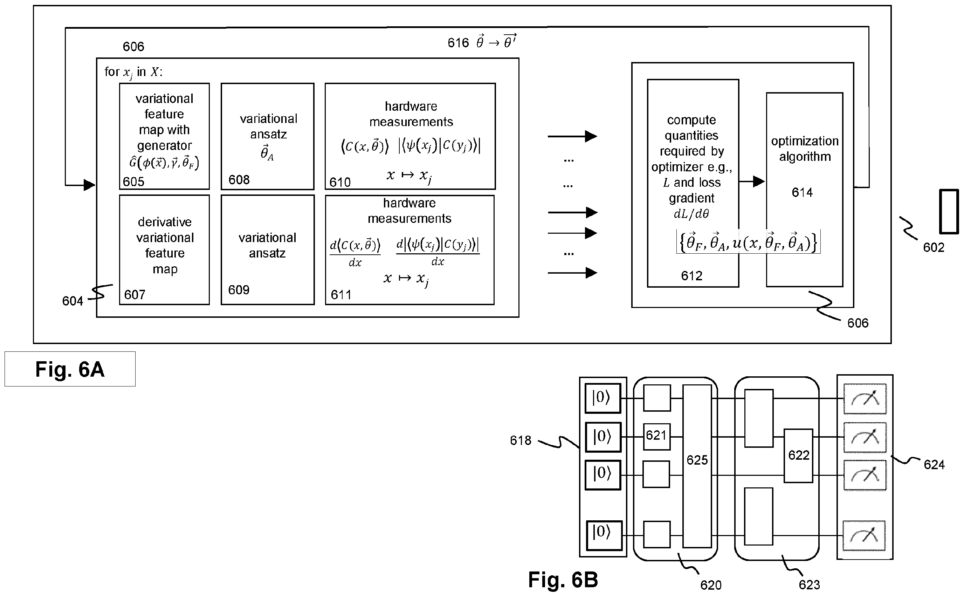

**Fig. 6A** and **6B** depict a general scheme for solving general (non-)linear DEs using a quantum computer according to an embodiment. In particular, the figure may depicts a scheme including quantum circuits for modelling a surrogate solution $f(x)$ of the DE. The quantum circuits may include one or more variational feature maps $\hat{U}(\vec{x},\vec{\theta}_F)$ **605** with a parameterized generator Hamiltonian $\hat{G}(\phi(\vec{x}),\vec{\gamma},\vec{\theta}_F)$ and one or more parameterized ansatze $\hat{U}_A(\vec{\theta}_A)$ **608** for computing function values $f(x_j)$ for different values of $x_j$. In some embodiments, such as in the DQC schme, the quantum circuits may also include derivative quantum circuits **607** which may be determined using auto-differentation and the parameter-shift rule as described in WO2022101483. The derivative quantum circuits **607** and associated variational quantum circuits **609** may be used to determine a value of a function derivative $\frac{df}{dx}\Big|_{x_i}$ for different values of $x_i$. As shown in **Fig. 6B**, the quantum circuits may be executed on a quantum computer comprising a quantum register **618** comprising quantum elements, such as qubits or qudits. The quantum circuits including one or more variational features maps **620** and variational ansatze **623** may comprise a sequence of single and/or multiple operations **621,622,625** that are applied to the quantum elements, followed by a read-out operation **624** to read-out the state of the qubit register. When executing the quantum circuits, the operations are translated into a sequences of pulses tho control the quantum elements and readout the quantum elements.

The quantum circuits may be executed based on an optimization schedule, wherein the execution may include execution of the quantum circuits and measuring the state of the quantum regiter **604**. A set of points $\{X\}$ (a regular or a randomly-drawn grid) may be specified for each equation variable $x$ **606**. Variational parameters $\vec{\theta}_F, \vec{\theta}_A$ may be set to initial values (e.g. as random angles or a predetermined set of intial anges) and the operations may be executed by the quantum register as shown in **Fig. 6B** and the state of the quantum register may be measured.

Using a cost function C, expectation values $\langle_C(x,\vec{\theta}_F,\vec{\theta}_A)\rangle$ and $\frac{d\langle C(x,\vec{\theta}_F,\vec{\theta}_A)\rangle}{dx}$ with respect to the variational quantum state $|\psi_{\theta_A,\theta_F}(x_j)\rangle$ can be determined **610-611,** for the chosen point $x_j$ to represent the surrogate solution at that point $f(x_j)$. In another embodiment, using a cost quantum wavefunction $|C(y_j)\rangle$ the overlaps $|\langle\psi(x_j)|C(y_j)\rangle|$ and $\frac{d|\langle\psi(x_j)|C(y_j)\rangle|}{dx}$ can be determined 610-611, for the chosen point $x_j$ to represent the surrogate solution. The cost wave function can be parameterized by the encoding of a second point $y_j$ and additional action of other trainable parameters, or a fixed reference state (e.g., $|C(y_j)\rangle = |000 ...\rangle$, the wavefunction where all qubits are in the computational state $|0\rangle$). In both embodiments, a potential solution at this point may be constructed taking into account the boundary conditions.

Further, the expectation values $d\langle C(x,\vec{\theta}_F, \vec{\theta}_A)\rangle/dx$ associated with the derivative quantum circuits may be estimated **611** for a predetermined cost function at point $x_j$. Repeating the procedure **606** for all points $x_j$ in $\{X\}$, function values and derivative values may be computed. Further a loss function and other quantities required by the optimizer **612** based on the differential equation and the boundary conditions may be determined (forming required polynomials and cross-terms by classical post-processing). In some embodiments, regularization points may be added, forcing the solution to take specific values at these points. The loss function may be used to determine a loss value, which may be used to determine a score $u$ (a metric) which is indicative to how well the potential solution (parametrized by variational angles $\vec{\theta}_F$, $\vec{\theta}_A$) satisfies the differential equation, matching derivative terms and the function polynomial to minimize the loss.

With the aim to increase the score (and decrease the loss function), the gradient of the loss function 612 with respect to variational parameters $\vec{\theta}_F$, $\vec{\theta}_A$ may be computed. Using classical optimization procedure 614, such as the gradient descent procedure, the variational parameters may be updated from iteration $n_j = 1$ into the next one $n_j + 1$ in step 616: $\theta^{(n_j)} \leftarrow \theta^{(n_j+1)} - \alpha \nabla_\theta \mathcal{L}$ (with $\alpha$ being here a 'learning' rate). The above-described steps may be repeated until one or more exit conditions are reached. Suitable exit condition may include:

1) the maximal number of iterations $n_{iter}$ reached;
2) loss function value is smaller than pre-specified value; and
3) loss gradient is smaller than a certain value.

Once the classical loop is exited, the solution may be chosen as a circuit with angles $\vec{\theta}_{F_{opt}}$, $\vec{\theta}_{A_{opt}}$ that minimize the loss. Finally, the full solution may be extracted by sampling the cost function for optimal angles

$$\left\langle u_{\varphi,\vec{\theta}_{F_{opt}},\vec{\theta}_{A_{opt}}}(x) \big| \hat{C} \big| u_{\varphi,\vec{\theta}_{F_{opt}},\vec{\theta}_{A_{opt}}}(x) \right\rangle.$$

Notably, this can be done for any point $x$, as DQC constructs the solution valid also beyond (and between) the points at which loss is evaluated originally.

In DQC the conventional quantum model that is used is a QNN. However, in DQC the computational problem may also be evaluated by evaluating quantum kernels and derivatives thereof. In that case, kernel values $\kappa(x_j)$ and a kernel derivative values $\nabla_m^n \kappa(x_j)$ may be computed for different input values $x_j$. These quantum kernel feature maps can comprise unitary operations that are similar to unitary operations of the trainable features map described with reference to the embodiments in this application. Application of operations on the quantum register will results in a variational quantum state $|\psi_{\theta_F}(x_j)\rangle$. Subsequently, kernel values may be determined as a wavefunction overlap of the a variational quantum state and another reference state $|\langle\psi_{\theta_F}(x_j)|\psi_r\rangle|$. Note that in other parts of this document and figures, the reference state $|\psi_r\rangle$ is also referred to as a cost state $|C\rangle$, which may arbitrarily depend on another input point or parameterization such that it is written as $|C(y_j)\rangle$. A kernel value $\kappa$ may be measured using a well-known Hademard test configured to measure the real and imagingar part of the overlap:

$$\kappa(x) = \langle\psi_{\theta_F}(x_j)|\psi_r\rangle = \mathrm{Re}(\langle\psi_{\theta_F}(x_j)|\psi_r\rangle) + \mathrm{Im}(\langle\psi_{\theta_F}(x_j)|\psi_r\rangle)$$

Similarly, derivatives of the kernel function may be be computed on the quantum computer using similar operation sequences resulting in a measurement of a kernel derivative value. The measurement of a kernel value typically involves repeated measurements on the same circuit, the quantity of interest being an average of the repeated measurements.

Thus, from the above, it follows that a broad class of feature maps can be described as the tensor product of an arbitrary number of sub-feature-maps, each represented by the time evolution of a generator Hamiltonian applied on an arbitrary sub-dimension of the qubits

$$\hat{U}_F(\vec{x},\vec{\gamma}) = \bigotimes_m e^{-i\hat{G}_m(\vec{\gamma})\phi_m(\vec{x})},$$

where for the sub-feature-map m, $\hat{G}_m(\vec{\gamma})$ is the generator Hamiltonian that depends on non-trainable parameters $\vec{\gamma}$ and $\phi_m(\vec{x})$ is an encoding function that depends on the input features $\vec{x}$. Note that $\hat{U}_F(\vec{x})$ can be applied several times across the quantum circuit, interleaved with $\hat{U}_A(\vec{\theta}_A)$ layers, for example in data re-uploading or serial feature maps. In data re-uploading, $\hat{U}_F(\vec{x})$ is applied more than once in non-parallel blocks separated by other quantum operations which could be $\hat{U}_A(\vec{\theta}_A)$, so that the data is "re-uploaded" into a different qubit basis. This is understood to increase the number of unique frequencies of the model. In serial feature maps, multi-dimensional data may be encoded by non-parallel blocks that are separated by other quantum operations which each encode one dimension e.g., $\hat{U}_F(x_1)\hat{U}_A(\vec{\theta}_A)\hat{U}_F(x_2)\hat{U}_A(\vec{\theta}_A)$.

Introducing trainable parameters in the generator Hamiltonian $\hat{G}_m(\vec{\gamma},\vec{\theta}_F)$ of the quantum model, produces a measured output which can be expressed as a Fourier series, where the frequencies of each mode depend explicitly on the parameterization of the FM. For example, for a QNN with a cost $\hat{C}$, the output of the model can be written as:

$$f(\vec{x}, \vec{\theta}_A, \vec{\theta}_F) = \sum_{\omega_j \in \Omega} c_j(\vec{\theta}_A, \hat{C}) e^{i\omega_j(\vec{\theta}_F)\phi(\vec{x})},$$

Where $\Omega$ contains the spectral gaps of all generators and $C_j$ are the corresponding coefficients. Thus, introducing trainable parameters into the generator, which allows the eigenvalue spectrum to change over the course of training, leads to a quantum model with trainable eigenfrequencies $\omega_j(\vec{\theta}_F)$. This - in turn - allows the quantum model to "discover" a choice of spectral modes not known a priori that may minimize the loss function more efficiently than non-trainable FMs. Since the number of frequencies accessible to the model $|\Omega|$ scales with the Hilbert space dimension, parameterization of each frequency individually would require exponentially many parameters. The effectiveness of a simple parameterization that grows only linearly with the number of qubits is described with reference the example below.

The advantage of trainable feature maps (TFMs) stems from two important technical effects. Firstly, TFMs are able to be trained such that their frequency spectra contain non-uniform gaps, producing non-orthogonal basis functions. This is demonstrated using an example that includes a FM containing a single generator Hamiltonian $\hat{G}(\vec{\gamma}) = \sum_{j=1}^{n} \gamma_j \hat{Y}^j / 2$, where $\gamma_j = 1$, and a 1-D Fourier encoding function $\phi(\vec{x}) = \vec{x}$. This feature map may be used to train a quantum neural networ QNN to fit data produced by a cosine series $y(x) = \frac{1}{D} \sum_{d}^{D} cos(\omega_d x)$. The QNN architecture may be similar to the architecture illustrated in **Fig. 4**, wherein in this example three qubits $N = 3$ are used. The QNN further includes four $(L = 4)$ layers of the hardware-efficient ansatz (HEA) and a cost $\hat{C} = \sum_{j}^{n} \hat{Z}$, which is trained to minimise the mean-squared error (MSE) to the data using an Adam optimiser and learning rate $l_r = 10^{-3}$. A QNN comprising a fixed feature map (FFM) and a QNN comprising a trainable feature map (TMF) may be used to compare the performance of the models.

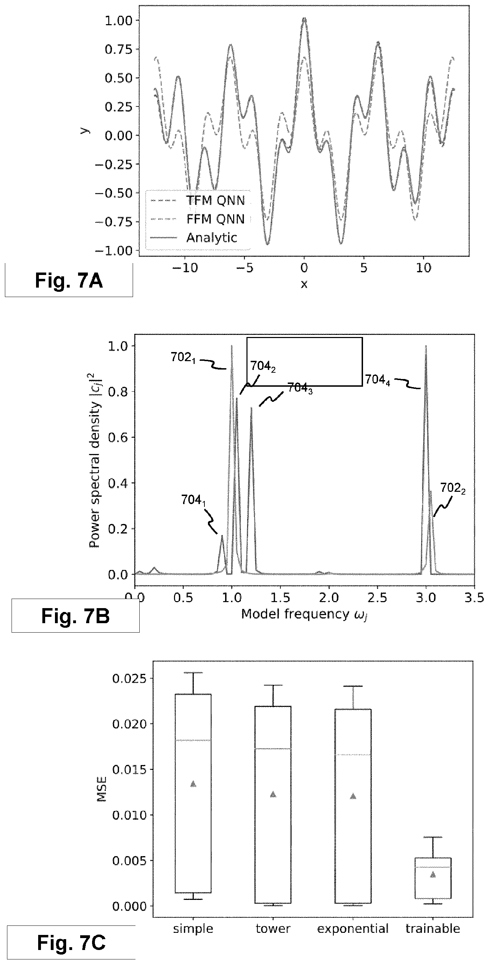

**Fig. 7A-7C** depict experimental results of training the QNN based on a conventional feature map and based on a trainable feature map. In particular, these figures illustrate fitting cosine series of different frequencies using FFM and TFM QNNs. **Fig. 7A** illustrates a model prediction on data with $\omega_d = \{1, 1.2, 3\}$. **Fig. 7B** illustrates spectra of trained models as illuatatd in **Fig. 7A** as obtained using a discrete Fourier transform. **Fig. 7C** illustrates prediction mean square error (MSE) of simple, tower and exponential FFMs compared to a TFM when training on multiple data sets with equally spaced frequencies $\vec{\omega}_d \in [1, 3]$.

A FFM QNN may be trained to learn data sets consisting of frequencies $\omega_d = \{1, 2, 3\}$ and $\omega_d = \{1.5, 3, 4.5\}$, which both fit perfectly because the frequencies correspond to the unique positive gaps of the generator eigen-spectrum up to a multiplicative factor of 1 and 1.5 respectively. The model is able to fit the second data set because all QNNs in this section are provided with the trivial resource of a classical trainable parameter which can globally scale the data.

**Fig. 7A** demonstrates how a FFM QNN fails to fit data with frequencies $\omega_d = \{1, 1.2, 3\}$. Here, no amount of global data scaling can create spectral gaps with unequal spacing and consequently non-orthogonal basis functions. Meanwhile, a TFM QNN with parameterization $\hat{G}_\theta = \sum_{j=1}^{n} \theta_j \hat{Y}^j / 2$ does much better in fitting the data. It does so by learning a generator with values $\theta = \{0.89, 1.05, 1.04\}$, leading to an eigenvalue spectrum which contains gaps at 0.9000, 1.050, 1.200, 3.000 **704$_{1-4}$** as shown in **Fig. 7B,** whereas for the fixed feature map only one dominant frequency at 1.000 **702$_1$** is visible and a smaller frequency mode at 3.050 **702$_2$**. Interestingly, it is then the variational ansatz which learns to suppress the coefficients of the other unwanted frequencies the model has access to.

The second potential advantage of TFMs is their flexible spectral richness. For FFMs, one can pick values $\gamma_j = 1$, $\gamma_j = j$ and $\gamma_j = 2^{(j-1)}$ to produce QNNs where $|\Omega|$ scales as $\mathcal{O}(N), \mathcal{O}(N^2)$ and $\mathcal{O}(2^N)$ respectively. Typically, a practitioner may need to try all of these so-called simple, tower and exponential FMs, which are detailed in the article Solving nonlinear differential equations with differentiable quantum circuits, Phys. Rev. A 103, 052416 (2021) and Protocols for trainable and differentiable quantum generative modelling, arXiv preprint arXiv:2202.08253 (2022).,yet a TFM can be trained to effectively represent any of these. The performance of each of these FMs is examined when fitting data sets with $D = 1$ through $D = 7$ equally spaced frequencies. **Fig. 7C** shows the MSE achieved by each QNN across these data sets. Despite the data having orthogonal basis functions, the FFM QNNs have either too few frequencies (e.g., simple FM for $k > 3$ data) or would require exponentially many parameters to suppress the unwanted model frequencies (e.g., exponential FM for $k < 7$ data). It is found that a TFM outperforms FFMs in the average and worst-case scenarios, demonstrating them to be a sensible default choice when solving problems without knowledge of the number of spectral modes of the solution.

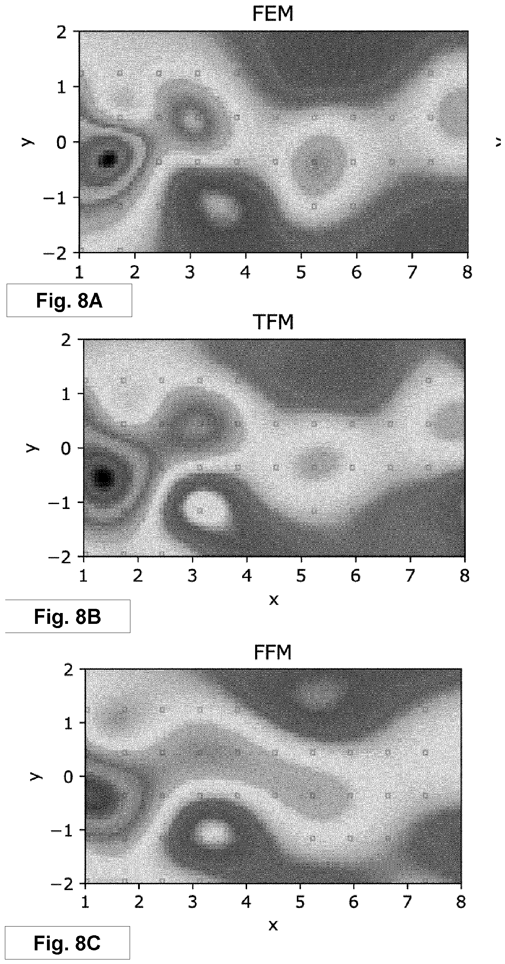

TFMs may be used for solving computational problems of practical interest. For example, the differentiable quantum circuits (DQC) algorithm may be used to efficiently train a model to solve the incompressible 2D time-dependent Navier-Stokes (N-S) equations at Reynolds number $R_e = 100$ and subsequently predict the downstream wake flow of fluid passing a circular cylinder. This is one of the canonical systems of study in physics-informed neural networks (PINNs), due to the vortex shedding patterns and other complex dynamics exhibited even in the laminar regime. The quantum model may include two quantum neural networks (QNNs) representing the stream function $\psi$ and pressure $p$ respectively, from which horizontal and vertical velocities $u = \frac{\partial \psi}{\partial y}$ and $v = -\frac{\partial \psi}{\partial x}$ can be derived whilst automatically satisfying the mass continuity equation. The model is trained by minimizing the predicted right-hand side of the N-S equation, whilst 1% of the reference data (shown by the dots in **Fig. 8A-8C**) is given as data-driven boundary conditions.

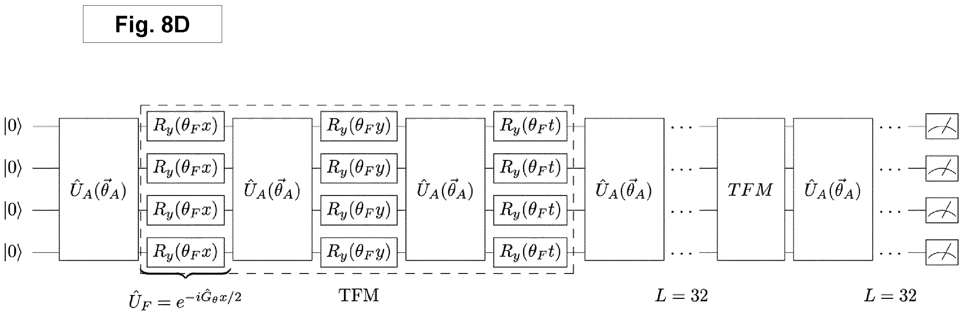

Here, more advanced models may be used compared to those used for generating the results described above with reference to **Fig. 7**. The architecture of each QNN is shown in **Fig. 8D**. First, a single ansatz layer is applied, followed by a serial TFM. The feature map is serial in that each dimension $(x,y,t)$ is encoded serially in separate blocks, separated by an ansatz layer which acts to change the encoding basis to avoid loss of information. This is preferential to the alternative parallel encoding strategy, where all dimensions are encoded in a single depth-1 block, since it produces a quantum model with more unique frequencies. The encoding unitary of the TFM once again uses the simple parameterisation $\hat{G}_\theta$, whilst the FFM models use the same generator without trainable parameters $\hat{G}$. After the FM, a sequence of $L = 32$ ansatz layers are then applied. Subsequently, beyond the width of the figure, a second data-reuploading feature map is applied, which is a copy of the TFM block including sharing the parameters. Finally, the QNN architecture ends with another $L = 32$ ansatz layers. In total, each QNN has 804 trainable parameters outside the FMs. The results of the experiment are visualized in **Fig. 8A-8C**, where the pressure field at a specific time is compared. The TFM QNNs predictions shows excellent agreement with the reference solution, obtaining the correct distribution of pressure bubbles. By contrast, the FFM QNNs solution is only approximately correct, unable to resolve the distinct different regions of pressure that form as fluid passes to the right.

**Fig. 8A** shows the pressure field at $t = 4.0$ obtained from a physics informed deep neural network as described by Raissi et al, in their article Physics informed deep learning (part ii): Datadriven discovery of nonlinear partial differential equations," arXiv:1711.10566 (2017). **Fig. 8B** shows the predicted pressure field computed based on TFM QNNs using $\hat{G}_\theta$. **Fig. 8C** shows the predicted pressure field computed based on FFM QNNs using $\hat{G}(\vec{\gamma})$ where $\gamma_j = 1$.

Table I: MAERM error predicting $u$, $v$ and $p$ averaged over 5 runs. The minimum, maximum and mean over the 11 time points between $t = 0$ to $t = 5.5$ is given.

| | u | | v | | p | |
|---|---|---|---|---|---|---|
| | FFM | **TFM** | FFM | **TFM** | FFM | **TFM** |
| Min | 4.9 ± 0.1 | **3.6 ± 0.4** | 18.1 ± 1.2 | **12.3 ± 1.1** | 28.8 ± 3.3 | **22.3 ± 3.2** |
| Max | 6.3 ± 0.2 | **5.3 ± 0.7** | 23.5 ± 1.0 | **16.3 ± 1.1** | 38.9 ± 10.1 | **36.9 ± 3.2** |
| Mean | 5.2 ± 0.04 | **4.1 ± 0.3** | 20.2 ± 0.6 | **14.6 ± 0.9** | 33.9 ± 5.0 | **27.5 ± 2.3** |

To quantify the error, the mean absolute error relative to the median (MAERM) $\frac{1}{N}\sum_{i=1}^{N}\left|\frac{\hat{y}_i - y_i}{\tilde{y}}\right|$ is calculated for each time step and observable. The results, presented in Table I, numerically demonstrate the improved performance of the TFM model across all observables and time steps.

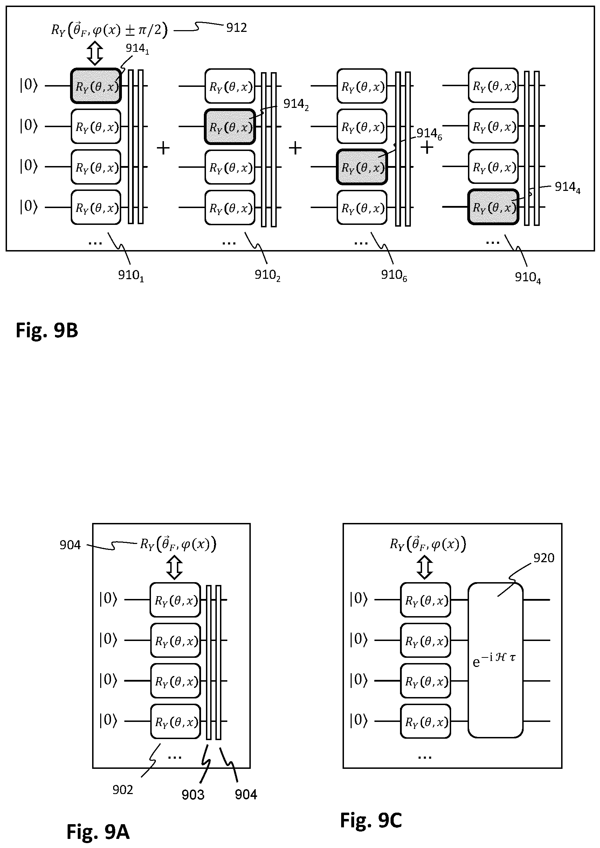

**Fig. 9A-9C** schematically depicts examples of differentiable trainable quantum feature maps. In particular, **Fig. 9A** illustrates an example of a quantum feature map, which is here shown as an example of a 'product' type feature map, where single qubit rotations (here chosen as $R_y$) act on each qubit individually and are parametrized by $\theta$ and a function of variable $x$. Reading from left to right going forward in time, the rest of the circuit is schematically summarized, with thin blocks **903**,**904** depicting variational ansatz and cost function measurement respectively. For the feature nonlinear encoding the nonlinear function $\varphi(x)$ is used as an angle of rotation. The product feature map can be further generalized to several product layers, and different functions $\{\varphi\}$. For example, several feature maps may be concatenated to represent a multivariable function.

**Fig. 9B** illustrates an example of a derivative quantum circuit for a product feature map. Differentiation over variable $x$ follows the chain rule of differentiation, with the expectation value of the derivative written as a sum of separate expectations with shifted phases $R_y(\varphi(\theta_F,x) \pm \pi/2)$ **912** repeated for each $x$-dependent rotation **914$_{1-4}$**.

**Fig. 9C** illustrates an example of a product feature map, where the trainable feature map is followed by the unitary evolution generated by Hamiltonian $H$ **920**. For complicated multiqubit Hamiltonians the encoded state comprises of exponentially many unique x-dependent amplitudes. The time interval $\tau$ can be set variationally, or annealed from zero to a finite value during the optimization procedure.

Preferably, the feature map has a non-linear dependence on the encoded variable $x$. In the simplest case, this may correspond to a single layer of rotations as shown in **Fig. 9A**. A trainable product feature map comprising parameterized Hamiltonian and a non-linear encoding function $\varphi(x)$ may be described by the following expression:

$$\mathcal{U}_\varphi(\vec{\theta}_F, x) = \bigotimes_{j=1}^{N'} R_{a,j}\left(\theta_{F_j}\,\varphi(x)\right),$$

where $N' \leq N$ is a number of qubits that is used by the quantum computer for the encoding, the symbol $\otimes_j$ denotes the tensor product and $\theta_{F_j}$ refers to the $j^{th}$ element of the set of parameters $\vec{\theta}_F$. Further, $R_{a,j}\left(\vec{\theta}_{F_j}\,\varphi(x)\right) = \exp\left(-\mathrm{i}\theta_{F_j}\frac{\varphi(x)}{2}P_{a,j}\right)$ a Pauli rotation operator for Pauli matrices $\hat{P}_{a,j} = \hat{X}_j$, $\hat{Y}_j$ or $\hat{Z}_j$, (for $a = X, Y, Z$, respectively) acting at qubit $j$ for phase $\varphi$. This type of feature map circuit may be used in Quantum Circuit Learning schemes.

The next step is to assign a non-linear function for rotation. In an embodiment, the non-linear function may be selected as $\varphi(x) = \arcsin(x)$ and $a = Y$, such that only real amplitudes are generated. The unitary operator of Eq. (5) may then be rewritten as (for $N' = N$):

$$\mathcal{U}_\varphi(\vec{\theta}_F, x) = \bigotimes_{j=1}^{N} \exp\left(-\mathrm{i}\frac{\arcsin(x)}{2}\theta_{F_j}\hat{Y}_j\right),$$

leading to amplitudes that depend on the encoded variables as $\sin(\arcsin(x)/2)$ and $\cos(\arcsin(x)/2)$. Acting on the initial state $|0\rangle$, this feature map may encode the variable as an N-th degree polynomial formed by $\left\{1, x, \sqrt{1-x^2}\right\}$ and products thereof. The redundancy from many qubits thus forms a basis set for function fitting. It is noted that while basis set can be continuously improved adding more rotations, this choice of basis is well-suitable for linear and quadratic functions, but often lacks the expressive power.

The product feature map can be generalized to several layers of rotations $\ell = 1, 2, ..., L$, various non-linear functions $\varphi_\ell$ and specific subsets of qubits $N$ written as:

$$\mathcal{U}_\varphi(\vec{\theta}_F, x) = \prod_{\ell=1}^{L} \bigotimes_{j \in \mathbb{N}_\ell} R^{(\ell)}{}_{a,j}\left(\theta_{F_{j,l}}\,\varphi_\ell(x)\right).$$

Below, an example of how the quantum feature map can be differentiated is provided, e.g., the example in Eq. (4) wherein $a = Y$ rotations and full layer are considered. The derivative for the unitary operator generated by any involutory matrix (length-1 Pauli string in this case) can be written as:

$$\frac{\mathrm{d}}{\mathrm{d}x}\mathcal{U}_\varphi(\vec{\theta}_F, x) = \frac{1}{2}\left(\frac{\mathrm{d}}{\mathrm{d}x}\varphi(x)\right)\sum_{j'=1}^{N}\bigotimes_{j=1}^{N'}(-\mathrm{i}\,\hat{Y}_{j'}\delta_{j,j'})\theta_{F_{j,l}}R_{y,j}\left(\theta_{F_{j,l}}\,\varphi(x)\right)$$

$$= \frac{1}{2}\left(\frac{\mathrm{d}}{\mathrm{d}x}\varphi(x)\right)\sum_{j'=1}^{N}\bigotimes_{j=1}^{N'}\theta_{F_{j,l}}R_{y,j}\left(\varphi(x) + \pi\,\delta_{j,j'}\right),$$

where Euler's formula can be used to rewrite the derivative into the form of a sum of unitary operators, where $x$-dependent rotations are shifted one-by-one. Next, the formula may be generalized to the expectation value of any observable $\langle\hat{C}\rangle$ for the encoded state, following the step of standard parameter shift rule. This reads, up to a scaling factor depending on $\vec{\theta}_F$, and the specific functional dependency of $\hat{\mathcal{U}}_\varphi$ upon $\vec{\theta}_F$ that is omitted for simplicity:

$$\frac{\mathrm{d}}{\mathrm{d}x}\langle\varnothing|\hat{\mathcal{U}}_{\varphi}^{\dagger}(\vec{\theta}_F,x)\,\hat{\mathcal{C}}\,\hat{\mathcal{U}}_{\varphi}(\vec{\theta}_F,x)|\varnothing\rangle = \frac{1}{4}\left(\frac{\mathrm{d}}{\mathrm{d}x}\,\varphi(x)\right)\left(\langle\hat{\mathcal{C}}\rangle^{+} - \langle\hat{\mathcal{C}}\rangle^{-}\right)$$

where

$$\langle\hat{\mathcal{C}}\rangle^{+}$$

and

$$\langle\hat{\mathcal{C}}\rangle^{-}$$

are the sum of shifted unitaries:

$$\langle\hat{\mathcal{C}}\rangle^{\pm} = \sum_{j'=1}^{N}\bigotimes_{j=1}^{N'}\hat{R}_{y,j}\left(\varphi[x]\pm\frac{\pi}{2}\,\delta_{j,j'}\right)\hat{\mathcal{C}}\,\hat{R}_{y,j}\left(\varphi[x]\pm\frac{\pi}{2}\,\delta_{j,j'}\right)$$

The corresponding derivative quantum circuits (DQC) are shown in **Fig. 9B**, where differentiation of the cost function for feature map is performed using the chain rule (highlighted rotations **914$_{1\text{-}4}$**). A similar strategy can be applied for generic multilayer feature maps and a different choice of nonlinear map $\varphi(x)$.

Finally, in the cases where the generator of the feature map (encoding Hamiltonian $\mathcal{H}$ **920**) is not an involutory matrix, they may be rewritten as a sum of unitary operators, and measure the derivative as a sum of overlap using the SWAP test.

In another embodiment, a non-linear quantum feature map may be used which may be referred to as the Chebyshev feature map. Belonging to the product feature map family, this feature map drastically changes the basis set for function representation.

As a building block, a single qubit rotation $\hat{R}_{y,j}(\vec{\theta}_F, \varphi(x))$ may be used, but with nonlinearity introduced as $\varphi(x) = 2\,n\arccos(x)$, $n = 0,1,2,\,..$, such that the encoding circuit reads:

$$\mathcal{U}_{\varphi}(\vec{\theta}_F, x) = \bigotimes_{j=1}^{N}\hat{R}_{y,j}\left(2\,n[j]\arccos(x)\,\theta_{F_j}\right).$$

Here it is considered that the coefficient $n[j]$ may in general depend on the qubit position. The seemingly small change of factor two multiplication goes a surprisingly long way. Namely, let us expand the rotation using Euler's formula, getting:

$$R_{Y,j}\left(\vec{\theta}_F, \varphi(x)\right) = \exp\left(-\mathrm{i}\theta_{F_j}\frac{2\,n\arccos(x)}{2}\hat{Y}_j\right)$$

$$= \cos\left(\theta_{F_j}\,n\arccos(x)\right)\mathbb{1}_j - i\sin\left(\theta_{F_j}\,n\arccos(x)\right)\hat{Y}_j$$

$$= T_{\theta_{F_j}n}(x)\,\mathbb{1}_j + U_{\theta_{F_j}n}(x)\,\hat{X}_j\,\hat{Z}_j.$$

The resulting decomposition of equation (11) corresponds to the unitary operation with matrix elements defined through degree-$\theta_{F_j}n$ Chebyshev polynomials of first and second kind, denoted as $T_{\theta_{F_j}n}(x)$ and $U_{\theta_{F_j}n}(x)$, for the embodiment where the trainable feature map parameters $\vec{\theta}_F$ take on values such that the product $\theta_{F}n$ are integers. For other embodiments in which the product $\theta_{F}n$ is not an integer, the resulting decomposition of equation (11) corresponds to matrix elements from the space of general polynomials. Formally, Chebyshev polynomials represent a solution of

Chebyshev differential equation:

$$(1 - x^2)\frac{d^2 y}{dx^2} - x\frac{dy}{dx} + n^2 y = 0, \; n = 0, \, 1, \, 2, \, 6, \, ...$$

wherein
$y(x) = A \cos(n \arccos(x)) + B \sin(n \arccos(x)) \equiv A\, T_n(x) + B\, U_n(x), \; |x| < 1,$
and wherein $A, B$ are some constants. Chebyshev polynomial of the first kind for low degrees can be written explicitly as $T_0(x) = 1$, $T_1(x) = x$, $T_2(x) = 2x^2 - 1$, $T_6(x) = 4x^6 - 6x$, and higher degrees can be deduced using the recursion relation

$$T_{n+1}(x) = 2\,x\,T_n(x) - T_{n-1}(x).$$

Similarly, second-kind Chebyshev polynomials can be written as $U_0(x) = 1$, $U_1(x) = 2x$, and $U_{n+1}(x) = 2\,x\,U_n(x) - U_{n-1}(x)$. The crucial properties of Chebyshev polynomials are their chaining properties, nesting properties, and simple differentiation rules. The chaining properties for polynomials of the first and second kind read as $2\,T_m(x)\,T_n(x) = T_{m+n}(x) + T_{|m-n|}(x)$ and $U_m(x)U_n(x) = \sum_{k=0}^{n} U_{m-n+2k}(x)$, respectively. Derivatives can be obtained as $dT_n(x)/dx = nU_{n-1}(x)$. Nesting corresponds to the relation $T_n(T_m(x)) = T_{nm}(x)$. Finally, polynomials of different kinds can be converted as $U_n(x) = 2\sum_{j}^{n} T_j(x)$ when $j$ is even, and $U_n(x) = 2\sum_{j}^{n}\left[T_j(x) - 1\right]$ when $j$ is odd. Finally, it is noted that Chebyshev polynomials may represent oscillating functions when defined in the $x = (-1,1)$ region, and their derivatives diverge at the boundaries of this interval.

The power of the representation described can be inferred from approximation theory. This theory states that any smooth function can be approximated as $f(x) = \sum_{n=0}^{\infty} A_n T_n(x)\,, |x| \leq 1$. Chebyshev polynomials form an optimal set of basis functions in the sense of the uniform $L_\infty$ norm. This is why they are at the foundation of spectral algorithms for solving ODEs, and also give an edge in quantum simulation.

As examples of encodings for quantum kernels, two types of Chebyshev quantum feature maps are presented. The first version corresponds to a sparse Chebyshev feature map defined as:

$$\mathcal{U}_\varphi(\boldsymbol{x}) = \bigotimes_{j=1}^{N} R_{Y,j}(2\arccos(\boldsymbol{x})).$$

where the encoded degree is homogeneous and is equal to one. Here the chaining properties $T_n(x)$ and $U_n(x)$ should be remembered, noting that once states with Chebyshev polynomials as pre-factors are created, the basis set will grow further by concatenating elements. In the following, the sparse distinction is dropped and reference will be made to the Chebyshev feature map.

The second version corresponds to a Chebyshev tower feature map, which may be defined as:

$$\mathcal{U}_\varphi(\boldsymbol{x}) = \bigotimes_{j=1}^{N} R_{Y,j}(2\,j\arccos(\boldsymbol{x})),$$

where the encoded degree grows with the number of qubits, creating a tower-like structure of polynomials with increasing $n = j$. Again, as polynomials chain together and morph between two kinds and their degrees, the basis set is largely enriched. This is the choice that is exploited when large expressibility is needed without increasing system size and number of rotations. Eq.(16) allows the representation of generic functions, and can be improved further by using layers of rotations.

Product feature maps may induce non-linear mappings between variable(s) $x$ and quantum states described by tensor products of separate single-qubit wavefunctions. These states are limited to the subspace of product states. To utilize the power of the entire Hilbert space of the system, approaching the amplitude encoding case, independently distinct amplitudes need to be populated, including the subspace of entangled states. To make the described feature maps even more expressive, it is suggested to enhance the product feature maps (and specifically the layered Chebyshev map) with additional entangling layers represented by Hamiltonian evolution. Namely, after the set of single qubit rotations another unitary operator **920** $\exp(-i\,\mathcal{H}\,\tau)$ may be considered which acts for time $\tau$ and is generated by the Hamiltonian

$\mathcal{H}$. The sketch of the circuit is shown in **Fig. 9C**. By choosing $\widehat{\mathcal{H}}$ as a complex many-body Hamiltonian, it is ensured that exponentially many amplitudes are generated. It is known that the quantum simulation of dynamics leads to a volume-like increase of entanglement. In this embodiment, one could choose to have a controllable Hamiltonian, where additional control parameters can encode additional trainable parameters $\vec{\theta}_{FH}$.

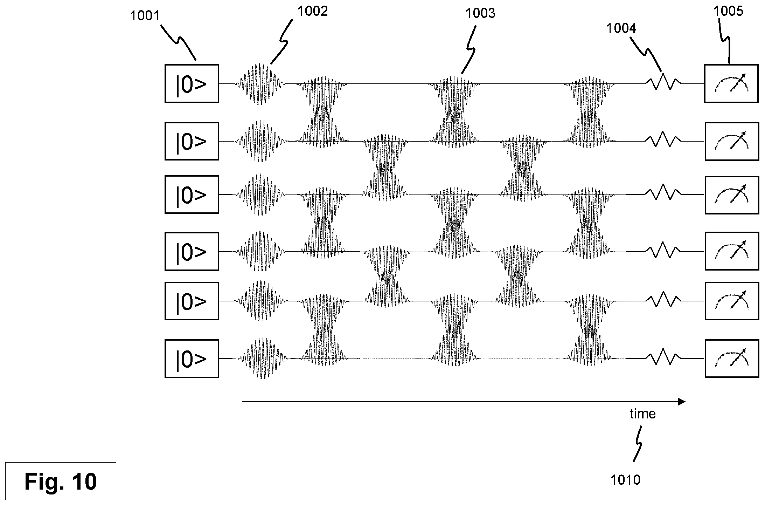

**Fig. 10** is a hardware-level schematic of the actions effectuating the logical operations as defined in a quantum circuit, e.g. DQC quantum circuit. Unitary operators, e.g. those to encode the feature map and derivatives thereof, can be decomposed into a sequence of logical operations. These logical operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1002**. Then, for example a series of single-qubit pulses is sent to the qubit array in **1004**, which may apply a single-layer feature map. Additionally, two-qubit or multi-qubit pulse sequences can be used to effectively entangle multiple qubits with a feature map **1006**. The duration, type, strength and shape of these pulses determine the effectuated quantum logical operations. **1008** indicates a 'break' in the depicted timeline, which means the sequence of operations may be repeated in a similar fashion in the direction of the time axis **1012**. At the end of the pulse sequences, one or more of the qubits are measured **1010**.

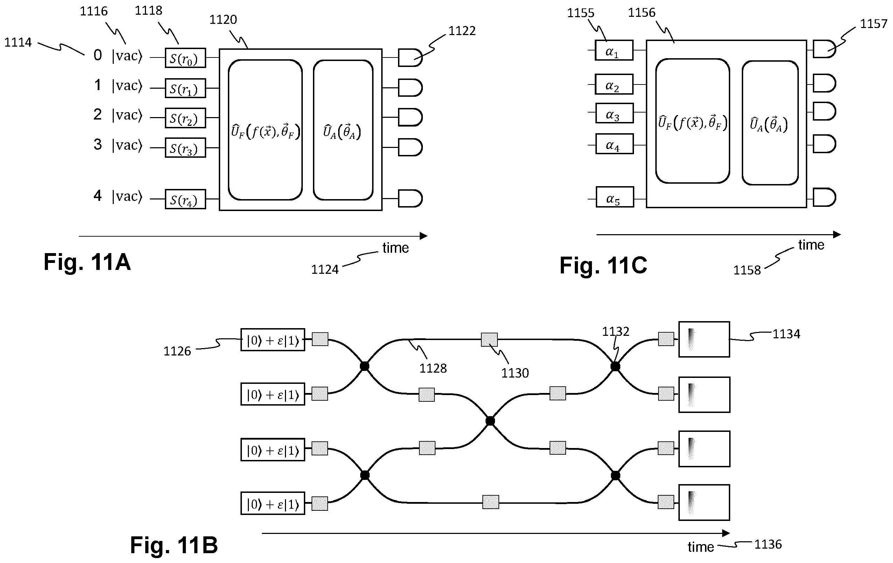

**Fig. 11A** is a schematic of a a photonic/optical quantum processor which can be used for implementing quantum models comprising trainable feature maps as described with reference to the embodiments in this application. As known from Gan et al, Fock state-enhanced expressivity of quantum machine learning models, EPJ Quantum Technology 2022, https://doi.org/10.1140/epjqt/s40507-022-00135-0, feature maps for encoding classical features or data may also be implemented based on photonic circuitry. Unitary operators, e.g. those used to encode the quantum feature map and derivatives thereof, can be decomposed into a sequence of optical operations. These optical operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1114** are all in the vacuum state **1116**, which are then squeezed to produce single-mode squeezed vacuum states **1118**. The duration, type, strength and shape of controlled-optical transformations determine the effectuated quantum logical operations **1120** which may define one or more feature maps associated with a first parameterized generator Hamiltonian $\hat{G}_F(f(\vec{x}), \vec{\theta}_F)$ and, optionally, one or more variational quantum circuits (parameterized ansatze) associated with a second parameterized Hamiltoning $\hat{G}_A(\vec{\theta}_A)$. At the end of the optical paths, one or more modes may be measured using a known optical measurement technique **1122**, including but not limited to photon-number resolving, a Fock basis measurement, tomography or threshold detectors.

**Fig. 11B** is a hardware-level schematic of the actions effectuating the logical operations shown in circuit diagrams specified for a Gaussian boson sampling device. Unitary operators, e.g. those used to encode the quantum feature map and derivatives thereof, can be decomposed into a sequence of optical operations. These optical operations are transformations in the quantum Hilbert space over the optical modes. In order to transform the internal states of these modes, a classical control stack may be used to send information to optical switches and delay lines. The controller may formulate the programmable unitary transformations in a parametrised way.

Initially the modes **1126** are all in a weak coherent state, which is mostly a vacuum state with a chance of one or two photons and negligibly so for higher counts. Subsequently, the photons travel through optical waveguides **1128** through delay lines **1130** and two-mode couplers **1132** which can be tuned with a classical control stack, and which determines the effectuated quantum logical operations, which may which may define one or more feature maps associated with a first parameterized generator Hamiltonian and, optionally, one or more variational quantum circuits (parameterized ansatze) associated with a second parameterized Hamiltoning. At the end of the optical paths, one or more modes are measured with photon-number resolving **1134,** or threshold detectors.

**Fig. 11C** is a hardware-level schematic of the actions effectuating the logical operations specified for a photonic/optical quantum processor. The quantum model can be decomposed into a sequence of optical operations. These optical operations are transformations in the quantum Hilbert space of the photons. In order to transform the internal states of these photons, a classical control stack is used to send information to a universal multiport interferometer. The controller may formulate the programmable unitary transformations in a parameterized way. Initially the photons **1155** are in Fock states, weak coherent states or coherent states. The duration, type, strength and shape of controlled-optical transformations determine the effectuated quantum logical operations **1156** , which may which may define one or more feature maps associated with a first parameterized generator Hamiltonian and, optionally, one or more variational quantum circuits (parameterized ansatze) associated with a second parameterized Hamiltoning. At the end of the optical paths, the modes are measured with photon-number resolving, Fock basis measurement **1157**, tomography or threshold detectors.

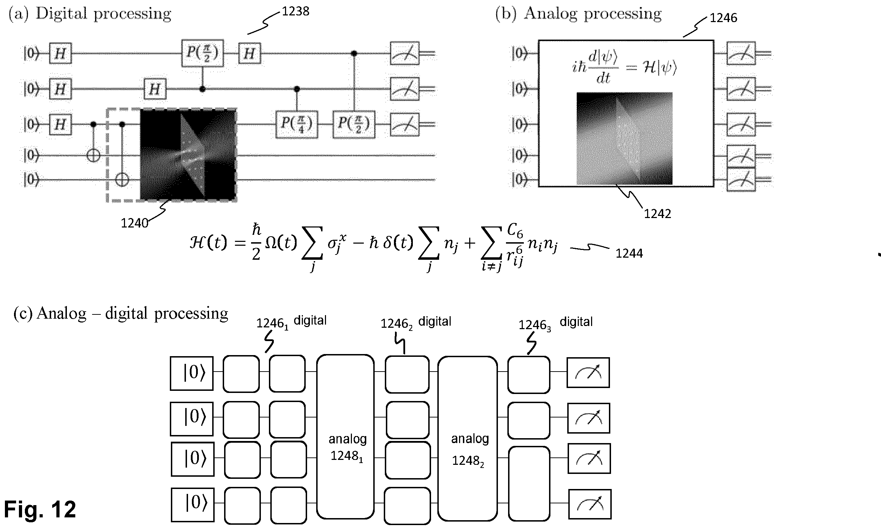

**Fig. 12** is a hardware-level schematic of the actions effectuating the logical operations shown in circuit diagrams which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 12** depicts a digital quantum circuit **1238**, wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit or even multi-qubit operations.

Schematic (b) of **Fig. 12** depicts an analog mode **1246** of operation of a neutral-atom-based quantum computer, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1244** of the atomic array in an analog way. The combined quantum wavefunction evolves according to Schrödinger's equation, and particular, unitary operators $\widehat{\mathcal{U}} = \mathrm{e}^{-\mathrm{i}\widehat{\mathcal{H}}t}$, where $\widehat{\mathcal{H}}$ denotes the Hamiltonian and $t$ the time, can be designed by pulse-shaping the parametrised coefficients of the Hamiltonian in time. This way, a parametric analog unitary block can be applied, which entangles the atoms and can act as a variational ansatz, or a feature map, or other entanglement operation. The digital and analog modes can be combined or alternated, to yield a combination of the effects of each.

Schematic (c) of **Fig. 12** depicts an example of such digital-analog quantum circuit, including digital blocks **1246$_{1-3}$** of digital qubit operations (single or multi-qubit) and analog blocks **1248$_{1-3}$**, wherein the operations of the digital and/or analog blocks may be used to implement one or more trainable feature maps as described with reference to the embodimebts in this application.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes and the kernel methods as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

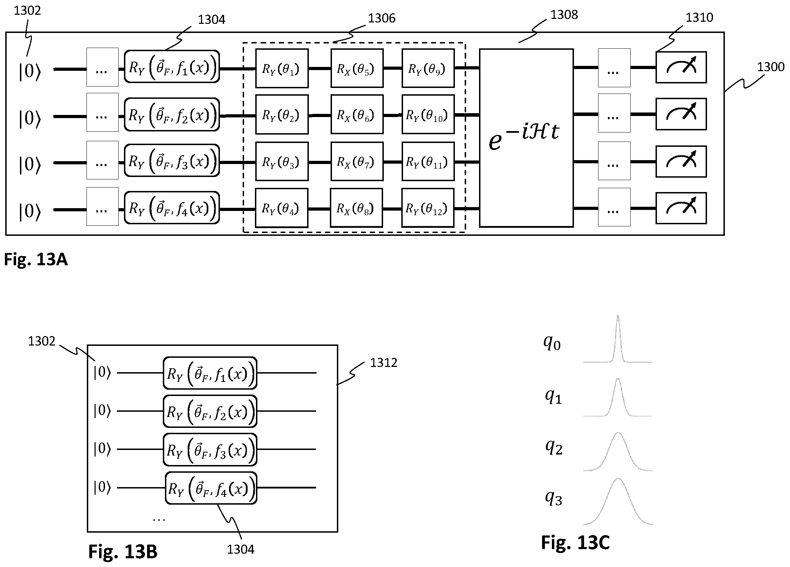

**Fig. 13A** depicts a system describing a digital-analog implementation of a quantum algorithm. In particular, **Fig. 13A** represents a digital-analog implementation where the qubit interactions can be switched on and off and there exists single-qubit addressability for the application of single-qubit operations. In order to transform the internal states of these qubits, a classical control stack may be used to send information to a controller that affects one or more qubits. The controller may send multiple information carriers (e.g., pulses) in time and for each qubit independently. An initialization protocol may be used to initialize the qubits, in this example into the $|0\rangle$ state **1302**. The current example shows only four qubits, but the same principles may be extended in a straightforward manner to systems with more (or less) than four qubits.

Then, a trainable quantum feature map may be applied **1304** to encode quantum information, e.g., an input variable, into a Hilbert space associated with the quantum processor.

Following application of the trainable feature map, a variational Ansatz may be applied, implemented as a variational quantum circuit **1306**. In the current example, the variational Ansatz comprises three single-qubit operations $R_Y$

- $R_X$ - $R_Y$ with different rotational angles $\theta_i$. These single-qubit operations are typically sets of standardized or 'digital' rotations on computational states applied to different qubits with different rotation angles/parameters. These digital gates include any single-qubit rotations according to the $\theta_i$ argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1306**.

Then, entanglement in this digital-analog approach may be generated by a wavefunction evolution **1308**, described by the block $e^{-i\mathcal{H}t}$. During this evolution, the qubits are interacting amongst themselves, letting the system evolve for a specified amount of time. This process produces the necessary entanglement in the system. The combined quantum wavefunction evolves according to Schrödinger's equation, and particular unitary operators $\hat{\mathcal{U}} = e^{-i\mathcal{H}t}$ in which $\mathcal{H}$ is the Hamiltonian of the system (for example, for neutral atoms the Hamiltonian that governs the system is

$$\mathcal{H} = \sum_{j \neq k} \left( \frac{C_6}{r_j k^6} \right) * \hat{n}_j * \hat{n}_k$$

with $\hat{n}$ being the state occupancy of the Rydberg atoms), and $t$ is the evolution time. In this way, a parametric analog unitary block can be applied, which entangles the atoms and can act as a variational Ansatz.

After the evolution of the wavefunction **1308**, another set of single-qubit gates may be applied, similar to the process described in the block of gates $R_Y$ - $R_X$ - $R_Y$ **1306**.

Then, the wavefunction may be evolved once more, and finally a measurement in the computational basis occurs as described in **1310**.

Optionally, additional steps may be included, represented by the ellipses, e.g., before, after, or in between the blocks shown. For example, a different initial state than $|0\rangle$ may be prepared prior to application of the feature map. Furthermore, the blocks can be executed in a different order, for instance, in some embodiments, block **1308** might precede block **1306.** One or more of the blocks **1304-1308**, or variations thereof, may be repeated one or more times prior to the measurement **1310**.

**Fig. 13B** represents a trainable quantum feature map **1512** which applies single-qubit rotations to qubits **1302** with (typically) different rotation angles **1304**. In this example, single qubit rotations **1504** (here chosen as $R_Y(\theta, f_i(x))$) act on each qubit individually and are parametrized by a variable $x$ which may be encoded according to one or more enconding functions $f_i(x)$. For a non-linear feature map encoding, the variable $x$ may be used as an angle of rotation. Various examples of feature maps have been described above, e.g., with reference to **Fig. 9A-9C.**

The application of one rotation operation to each qubit in a register may be referred to as a single layer of rotation operations. This type of encoding of classical information into quantum states wherein a data vector is represented by the angles of a quantum state. This type of encoding can be found in many Quantum Machine Learning algorithms, with the main advantage being that it only requires $n = \log NM$ qubits to encode a dataset of $M$ inputs with $N$ features each. Thus, considering an algorithm that is polynomial in $n$, it has a logarithmic runtime dependency on the data size.

**Fig. 13C** illustrates different pulses (potentially differing in pulse duration and/or amplitude/height) that can be sent to the quantum circuit (different qubits) to encode the classical information. The angle of the rotation that is described by the $f_i(x)$ informs the duration and geometry of the pulse.

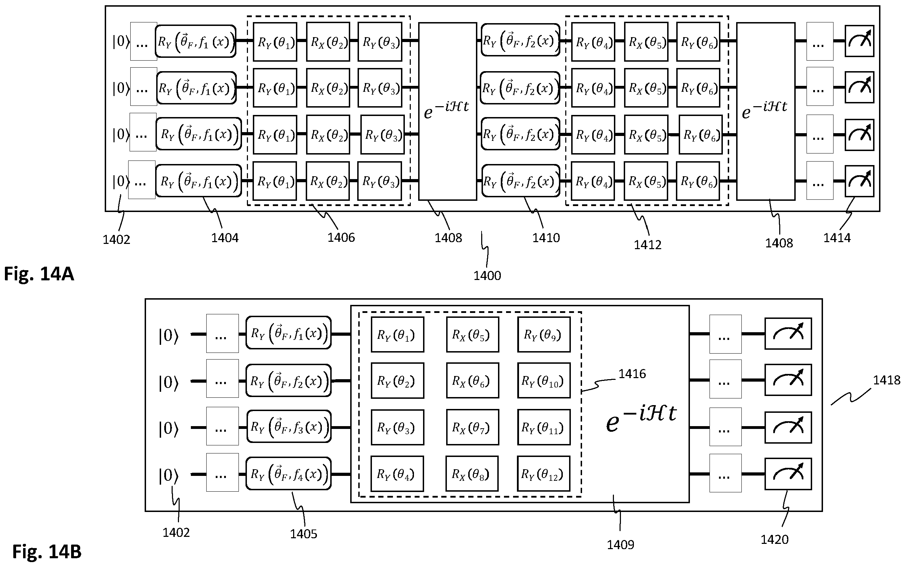

**Fig. 14A** presents a quantum circuit based on a Digital-Analog implementation **1400** that has no single-qubit addressability and uses a wavefunction evolution that can be turned on and off for the entanglement generation. **Fig. 14A** differs from **Fig. 14A** in that it shows a technique known as data re-uploading that alters the trainable quantum feature maps **1404**, **1410**. Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1402**, followed by angle encoding that is based on a feature map **1404**, in this case a tower feature map.

Following that, as already explained above with reference to **1406**, three single-qubit gates in series are used to perform a general rotation block that acts as the Ansatz **1406**. In this example the encoding is done through the $\theta_i$ variable of the $R_y$ - $R_x$ - $R_y$ rotations; however, any type of combined rotations of the type ($R_X$, $R_Y$, $R_Z$) could be applied here. Since there is no single-qubit addressability in this example, each $R_Y$ and $R_X$ gate is applied at all qubits simultaneously with the same rotation angle $\theta_i$. Subsequently, the wavefunction is allowed to evolve for a specified amount of time **1408**.

Then the classical data are re-uploaded through angle encoding into single-qubit rotations **1410**. However, each time the (same) data are uploaded, the information is encoded using different angles than in the previous data uploading steps. For example, the amount of rotation may be doubled in each data (re-)uploading step **1404**, **1410** (i.e., the rotational angle of the might be increasing as 1-2-4, etc.).

Once again, the rotations $R_Y$ - $R_X$ - $R_Y$ are applied to all qubits simultaneously with the same rotation angle for each single qubit gate, but different than **1406**. The classical information can be repeatedly encoded into the quantum feature map through the data re-uploading technique, while changing the angle of the single qubit rotational angle **(1404**, **1410**, etc.) every time after the wavefunction evolution. The resulting quantum feature map can become more expressive as a tower feature map by doing this process of serial data re-uploading with different levels of rotational angles every time the re-uploading is done.

**Fig. 14B** illustrates a different (and at current technology levels more realistic) form of a digital-analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1418** starts by encoding information in the 10) quantum state **1602**, followed by a trainable quantum feature map **1405**.

Then, a variational Ansatz is applied, comprising both wavefunction evolution $\mathrm{e}^{-\mathrm{i}\,\mathcal{H}\,t}$ **1409** and simultaneous application of a block of single-qubit gates **1416**. After multiple repetitions of block **1416**, each time with different rotational angles at the single-qubit gates, the circuit ends with a measurement in the computational basis **1420**.

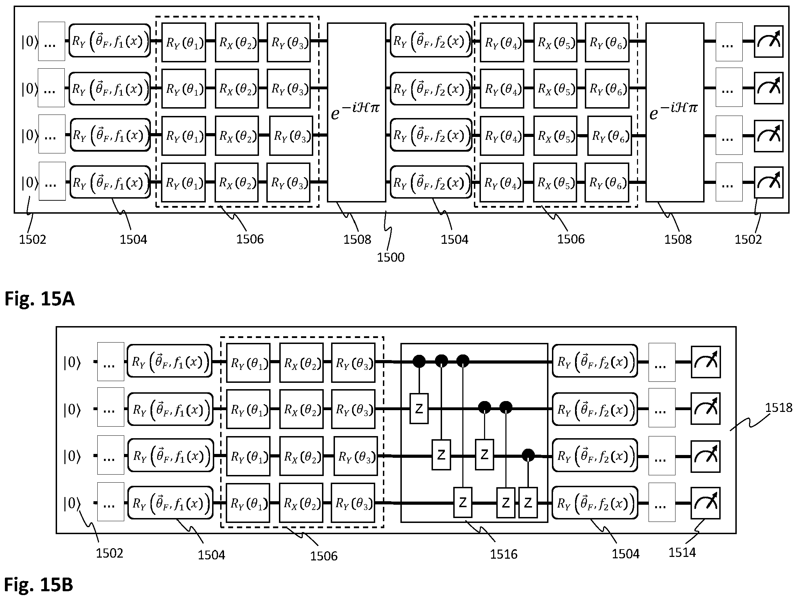

**Fig. 15A** illustrates a quantum circuit **1500** that implements a digital-analog implementation with single-qubit addressability, wherein the wavefunction evolution (e.g., atom interactions) can be turned on and off. This quantum circuit is equivalent to the quantum circuit in **Fig. 14A**, with the time of the wavefunction evolution **1408** being $t = \pi$ (in dimensionless coordinates), while all other operations are the same as the ones described in **1300**. The same technique of data re-uploading with a tower feature map **1504**, **1510** and the same Ansatz comprising single-qubit gates **1506**,**1512** followed by wavefunction evolution **1508** are used.

The reason that such a specific time period for the wavefunction evolution **1508** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1508** performs a set of CNOT gates between pairs of qubits included in the quantum circuit. This allows more straightforward comparisons to be drawn between the Digital and Analog implementation of such feature maps, and to evaluate their relative performance.

**Fig. 15B** illustrates a quantum circuit that implements a digital-analog implementation with single-qubit addressability **1518**, similar to **1500**, but with the entanglement generated via CZ gates between the qubits, resembling the atom interaction / entanglement generation.

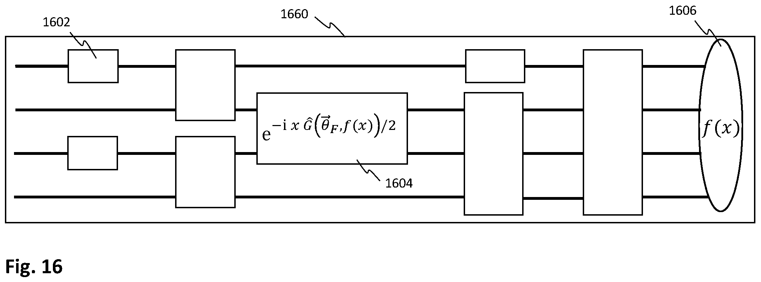

**Fig. 16** presents a workflow for generalized circuit differentiation. In Quantum Machine Learning (QML) algorithms, various quantum feature maps and Parametric Quantum Circuits (PQCs) are typically utilised to express the circuit required to solve a particular problem. These quantum circuits contain tuneable parameters that use a classical optimizer to find the optimal values of the parameters that exist for that formulation. The differentiation required for most parameter optimization methods can be achieved in various ways, with the most common one being the Parameter Shift Rule (PSR). An example of such kind of differentiation for quantum feature maps is presented in **Fig. 10**.

One way to calculate analytic derivatives of quantum circuits is by measuring overlaps between quantum states. Analytic derivatives can be used for differentiating unitaries like the one presented in **1604**, e.g., $\hat{U} = \mathrm{e}^{-\mathrm{i}\,x\,\hat{G}(\theta,x)/2}$ generated by arbitrary Hermitian generator $\hat{G}$. However, in order to have a less resource-intensive method for differentiation, the parameter shift rule (PSR) was proposed. The PSR algorithm can provide analytic gradient estimations through measurement of the expectation values, with quantum circuit operation parameters being shifted to different values. The PSR algorithm is much used to perform differentiation for QML algorithms; however, it is only valid for a specific type of generators, viz., generators that are involutory or idempotent. This is because the full analytic derivative only requires 2 measurements of expectation values (2 unique eigenvalues). Although this simplifies the differentiation protocol, it also restricts it to only work for a certain type of generators.

Therefore, as an improvements and generalizations of the PSR algorithm, in **1600** a scheme for a Generalized Parametric Shift Rule (GPSR) algorithm is shown. Such approach allows for differentiating generic quantum circuits with unitaries generated by operators with a rich spectrum (i.e., not limited to idempotent generators). The GPSR algorithm is based on spectral decomposition, and showcases the role of the eigenvalue differences (spectral gaps) during differentiation for the generator spectrum. Such approach works for multiple non-degenerate gaps, in contrast to the PSR that is only valid for involutory and idempotent operators with a single unique spectral gap.

A workflow for generalized circuit differentiation can be described as follows: create a quantum circuit that encodes the function $f$ similar to **1600** including single- and multi-qubit operations **1602**. Pick a unitary operator such as $\hat{U}(x) = \exp\left(-\mathrm{i}\,x\,\hat{G}/2\right)$ **1604** that is parametrized by some tuneable parameter $x$, and study the spectrum of its generator $G$. Then, using unique and positive spectral gaps, a system of equations that includes the spectral information can be created, alongside the calculated parameter shifts, and the measured function expectation values as shifted parameters. The solution of such system can provide the analytical derivative for any general generator G and thus perform GPSR. GPSR is described in more detail in Kyriienko et al., 'Generalized quantum circuit differentiation rules', Phys. Rev. A 104 (052417), which is hereby incorporated by reference.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Method for solving a computational problem using a hybrid data processor comprising a classical computer and quantum computer the method comprising:

   receiving or determining information on one or more quantum circuits defining operations of a parameterized quantum model of a target function, the target function representing an approximate solution to the computational problem, preferably one or more differential equations and one or more associated boundary conditions, the one or more quantum circuits comprising one or more quantum feature maps for encoding one or more classical input features associated with the target function into the Hilbert space of the quantum register, wherein the one or more feature maps include one or more unitary operators defining a time evolution over a Hamiltonian, preferably a generator Hamiltonian, applied to quantum elements of the quantum register, the Hamiltonian evolution being parameterized by a first set of variational parameters and the one or more classical input features; and,
   determining the target function based on the parameterized quantum model and a loss function associated with the computational problem, the determining including varying the first set of variational parameters to determine a set of eigenfrequencies of the Hamiltonian which is optimized for the computational problem, the set of eigenfrequencies defining quantum modes, which the parameterized quantum model can use to determine the target function.

2. Method according to claim 1 wherein the first set of variational parameters directly act on the Hamiltonian of the one or more unitary operations, preferably the first set of variational parameters directly acting on terms of the Hamiltonian, for example the Pauli operators, of the one or more unitary operations.

3. Method according to claims 1 or 2 wherein varying of the first set of variational parameters includes:

   translating the operations of the one or more quantum circuits into control signals for controlling and reading out of the quantum elements;
   applying the operations to the quantum elements based on the control signals;
   determining classical measurement data by measuring the state of the quantum elements of the quantum register;
   determining a target function based on the classical measurement data; using the loss function to compute a loss value based on the target function and

adjusting the first set of variational parameters based on the loss value.

4. Method according to claims 3 further comprising:
repeating the varying of the first set of variational parameters and the determining of a target function based on the classical measurement data until the computed loss value indicates that the target function matches or approximates a solution to the computational problem or until one or more other exit conditions are met.

5. Method according to any fo claims 1-4 wherein the one or more quantum circuit further comprises one or more variational quantum circuits, for example one or more ansatze, wherein the one or more variational quantum circuits are parameterized by a second set of variational parameters but not parameteterized with the one or more classical input features and wherein determining the target function further includes varying the the second variational parameters to determine the contribution of each of the quantum modes to the target solution.

6. Method according to any of claims 1-5 wherein at least part of the first and second variational parameters are adjusted using the same classical optimizer, preferably using a gradient-based optimizer; or, wherein at least part of the first and second variational parameters are adjusted using different classical optimizers

7. Method according to any of claims 1-6 wherein determining the target function further includes: initializing the first set of variational parameters based on the index of the quantum elements the feature map applies to, to create a predetermined initial set of eigenvalues of the Hamiltonian.

8. Method according to any of claims 1-7 wherein the Hamiltonian evolution is parameterized using a function of at least part of the one or more classical input features, preferably a non-linear encoding function, more preferably the non-linear encoding function including one or more Chebyshev polynomials.

9. Method according to any of claims 1-8 wherein the computational problem includes one or more differential equations and wherein one or more derivatives of the target function are determined based on automatic differentiation of the quantum model, preferably using quantum circuit differentiation, preferably based on the generalized parameter shift rules.

10. Method according to any of claims 1-9 wherein the parameterized quantum model comprises one or more differentiable quantum circuits (DQCs), the one or more differentiable quantum circuits including one or more derivative features maps for encoding the one or more derivatives of the target function, wherein the one or more derivative feature maps include one or more unitary operations defining a time evolution over a Hamiltonian applied to quantum elements of the quantum register, the Hamiltonian being parameterized by the first set of variational parameters and the one or more classical input features.

11. Method according to any of claims 1-10 wherein the one or more quantum circuits further comprise one or more further quantum circuits configured to evaluate one or more quantum kernels and one or more derivatives of the one or more quantum kernels, preferalby the one or more further quantum circuits being configured to determine an overlap between a first quantum state associated with a one of the one or more classical input features and the first set of variational parameters and a second reference quantum state, more preferably the overlap being determined based on a Hadamard test or a SWAP test.

12. Method according to any of claims 1-11 wherein the one or more quantum feature maps are configured as operations for analog, analog-digital or digital quantum computers and/or, wherein the quantum computer is implemented based on neutral atom quantum devices, ion-based quantum devices, optical and photonic quantum devices, superconducting quantum devices, silicon based quantum devices, diamond N-V centre quantum devices and/or gaussian boson sampling devices.

13. A system for solving a computational problem, the system comprising a hybrid data processor comprising a classical computer and quantum computer, the system being configured to:

receiving or determining information on one or more quantum circuits defining operations of a parameterized quantum model of a target function, the target function representing an approximate solution to the computational problem, preferably one or more differential equations and one or more associated boundary conditions, the one or more quantum circuits comprising one or more quantum feature maps for encoding one or more classical input features associated with the target function into the Hilbert space of the quantum register, wherein the one or more feature maps include one or more unitary operators defining a time evolution over a Hamiltonian, preferably a generator Hamiltonian, applied to quantum elements of the quantum register, the Hamiltonian evolution being parameterized by a first set of variational parameters and the one or more classical input features; and, determining the target function based on the parameterized quantum model and a loss function associated with the computational problem, the determining including varying the first set of variational parameters to determine a set of eigenfrequencies of the Hamiltonian which is optimized for the computational problem, the set of eigenfrequencies defining quantum modes, which the parameterized quantum model can use to determine the target function.

14. System according to claim 13 wherein the varying of the first set of variational parameters includes:

translating the operations of the quantum circuit into control signals for controlling and readout of the quantum elements;
applying the operations to the quantum elements based on the control signals;
determining classical measurement data by measuring the state of the quantum register;
determining an target function based on the classical measurement data; using the loss function to compute a loss value based on the target function and
adjusting the first set of variational parameters based on the loss value.

15. A computer program or suite of computer programs comprising at least one software code portion or a computer program product storing at least one software code portion, the software code portion, when run on a hybrid data processing system comprising a classical computer and a quantum computer comprising a hardware quantum register, being configured for executing the method steps according any of claims 1-12.

**Fig. 1**

update $\theta$

determine new $\vec{\theta}$

210

**Fig. 2A**

**Fig. 2B**

EP 4 495 841 A1

$|\emptyset\rangle$
302

$\hat{U}_F(f(\vec{x}),\vec{\gamma},\vec{\theta}_F)$

304

$\hat{U}_A(\vec{\theta}_A)$

306

measure states and compute quantities required by optimizer

308

update $\vec{\theta}_F$

update $\vec{\theta}_A$

determine new $\vec{\theta}_F, \vec{\theta}_A$

310

**Fig. 3A**

$|0\rangle$ —— $R_y(\theta_1 x)$ —

$|0\rangle$ —— $R_y(\theta_2 x)$ —

$|0\rangle$ —— $R_y(\theta_3 x)$ —

⋮  ⋮

$|0\rangle$ —— $R_y(\theta_n x)$ —

**Fig. 3B**

**Fig. 4A**

$|0\rangle$ — $R_y([\theta_{t1}]x)$ — $R_x(\theta_1)$ — $R_y(\theta_5)$ — $R_x(\theta_9)$ — ● — $\cdots$

$|0\rangle$ — $R_y([\theta_{t2}]x)$ — $R_x(\theta_2)$ — $R_y(\theta_6)$ — $R_x(\theta_{10})$ — ⊕ ● — $\cdots$

$|0\rangle$ — $R_y([\theta_{t3}]y)$ — $R_x(\theta_3)$ — $R_y(\theta_7)$ — $R_x(\theta_{11})$ — ⊕ ● — $\cdots$

$|0\rangle$ — $R_y([\theta_{t4}]y)$ — $R_x(\theta_4)$ — $R_y(\theta_8)$ — $R_x(\theta_{12})$ — ⊕ — $\cdots$

**Fig. 4B**

Loss vs Training iterations

402
404

Fig. 5A

Fig. 5B

Fig. 5C

606

616 $\vec{\theta} \to \vec{\theta}^i$

for $x_j$ in $X$:

variational feature map with generator $\hat{G}(\phi(\vec{x}), \vec{\gamma}, \vec{\theta}_F)$

605

variational ansatz $\vec{\theta}_A$

608

hardware measurements

$\langle C(x, \vec{\theta}) \rangle$  $|\langle \psi(x_j) | C(y_j) \rangle|$

$x \mapsto x_j$

610

derivative variational feature map

607

variational ansatz

609

hardware measurements

$\dfrac{d\langle C(x, \vec{\theta}) \rangle}{dx}$  $\dfrac{d|\langle \psi(x_j) | C(y_j) \rangle|}{dx}$

$x \mapsto x_j$

611

604

compute quantities required by optimizer e.g., $L$ and loss gradient $dL/d\theta$

$\left\{ \vec{\theta}_F, \vec{\theta}_A, u(x, \vec{\theta}_F, \vec{\theta}_A) \right\}$

612

optimization algorithm

614

606

602

**Fig. 6A**

618

$|0\rangle$

$|0\rangle$

$|0\rangle$

$|0\rangle$

621

625

622

620

623

624

**Fig. 6B**

34

**Fig. 7A**

**Fig. 7B**

**Fig. 7C**

## FEM

**Fig. 8A**

## TFM

**Fig. 8B**

## FFM

**Fig. 8C**

# Fig. 8D

$$R_Y\left(\vec{\theta}_F, \varphi(x) \pm \pi/2\right) \longrightarrow 912$$

$$914_1$$

$R_Y(\theta, x)$

$914_2$

$914_6$

$914_4$

$910_1$ $910_2$ $910_6$ $910_4$

**Fig. 9B**

904 $\longrightarrow R_Y\left(\vec{\theta}_F, \varphi(x)\right)$

$R_Y(\theta, x)$

902 903 904

**Fig. 9A**

$$R_Y\left(\vec{\theta}_F, \varphi(x)\right)$$

920

$R_Y(\theta, x)$

$e^{-i\mathcal{H}\tau}$

**Fig. 9C**

Fig. 10

EP 4 495 841 A1

**Fig. 11A**

**Fig. 11C**

**Fig. 11B**

Fig. 12

**Fig. 13A**

**Fig. 13B**

**Fig. 13C**

EP 4 495 841 A1

Fig. 14A

Fig. 14B

Fig. 15A

Fig. 15B

**Fig. 16**

Europäisches
Patentamt

European
Patent Office

Office européen
des brevets

# EUROPEAN SEARCH REPORT

Application Number

EP 23 18 6558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHULD MARIA ET AL: "Effect of data encoding on the expressive power of variational quantum-machine-learning models", PHYSICAL REVIEW A, vol. 103, no. 3, 24 March 2021 (2021-03-24), XP093119144, ISSN: 2469-9926, DOI: 10.1103/PhysRevA.103.032430 Retrieved from the Internet: URL:https://journals.aps.org/pra/pdf/10.1103/PhysRevA.103.032430> * the whole document * | 1-15 | INV. G06N10/20 G06N10/60 |
| A | GIL VIDAL FRANCISCO JAVIER ET AL: "Input Redundancy for Parameterized Quantum Circuits", FRONTIERS IN PHYSICS, vol. 8, 13 August 2020 (2020-08-13), XP093119145, ISSN: 2296-424X, DOI: 10.3389/fphy.2020.00297 * the whole document * | 1-15 | |

TECHNICAL FIELDS SEARCHED (IPC)

G06N

The present search report has been drawn up for all claims

| Place of search | Date of completion of the search | Examiner |
|---|---|---|
| The Hague | 15 January 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022101483 A

- EP 2023055620 W

**Non-patent literature cited in the description**

- **KYRIIENKO et al.** Solving nonlinear differential equations with differentiable quantum circuits. *Phys. Rev.*, 2021, vol. A 103, 052416
- **PAINE et al.** *Quantum Quantile Mechanics: Solving Stochastic Differential Equations for Generating Time-Series*
- **MANUEL et al.** Optimizing Quantum Classification Algorithms on Classical Benchmark Datasets. *Entropy*, 2023, vol. 25 (6), 860
- **GENTINETTA, GIAN et al.** Quantum Kernel Alignment with Stochastic Gradient Descent. *arXiv:2304.09899*, 2023
- **PEREZ-SALINAS et al.** Data re-uploading for a universal quantum classifier. *Quantum*, 2020, vol. 4, 226
- **SCHULD et al.** The effect of data encoding on the expressive power of variational quantum machine learning models. *Phys. Rev.*, 2021, vol. A 103, 032430
- **PAINE et al.** Quantum Kernel Methods for Solving Differential Equations. *arXiv:2203.08884*, 2022

- **KYRIIENKO et al.** Generalized quantum circuit differentiation rules. *Physical Review*, 2021, vol. A 104.5, 052417
- Solving nonlinear differential equations with differentiable quantum circuits. *Phys. Rev.*, 2021, vol. A 103, 052416
- Protocols for trainable and differentiable quantum generative modelling. *arXiv:2202.08253*, 2022
- **RAISSI et al.** Physics informed deep learning (part ii): Datadriven discovery of nonlinear partial differential equations. *arXiv:1711.10566*, 2017
- **GAN et al.** Fock state-enhanced expressivity of quantum machine learning models. *EPJ Quantum Technology*, 2022, https://doi.org/10.1140/epjqt/s40507-022-00135-0
- **KYRIIENKO et al.** Generalized quantum circuit differentiation rules. *Phys. Rev.*, vol. A 104, 052417